# EUROPÄISCHE PATENTSCHRIFT

(11) **EP 3 083 204 B1**
(45) Veröffentlichungstag und Bekanntmachung des Hinweises auf die Patenterteilung: **04.12.2019**
(21) Anmeldenummer: 14824831.3
(22) Anmeldetag: 18.12.2014
(51) Int. Cl.: B29C 64/209, B29C 64/141, B22F 3/105, G03G 15/22, B33Y 10/00, B33Y 30/00, B22F 3/00, B23K 26/03, B23K 26/06, B29C 64/153, B23K 26/144, B23K 26/342

(54) **GENERATIVE FERTIGUNGSEINRICHTUNG UND VERFAHREN ZUM BETRIEB EINER SOLCHEN**
ADDITIVE MANUFACTURING APPARATUS AND METHOD FOR OPERATING THE SAME
DISPOSITIF DE FABRICATION GÉNÉRATIF ET PROCÉDÉ PERMETTANT DE FAIRE FONCTIONNER LEDIT DISPOSITIF

(30) Priorität: 20.12.2013 DE 102013021944
(43) Veröffentlichungstag der Anmeldung: 26.10.2016
(73) Patentinhaber: Innova Solutions International s.r.o., Bratislava-Petrzalka 851 01 (SK)
(72) Erfinder: PAETZ, Dominique, 27783 Verden (DE)
(86) Internationale Anmeldenummer: PCT/EP2014/078507
(87) Internationale Veröffentlichungsnummer: WO 2015/091826

(56) Entgegenhaltungen:
- WO-A1-95/26871
- WO-A1-2004/037469
- JP-A- 2005 205 670
- US-A1- 2005 093 208
- US-A1- 2011 061 591

## Beschreibung

Die Erfindung betrifft eine generative Fertigungseinrichtung zur schichtweisen additiven Fertigung von dreidimensionalen Objekten gemäß dem Oberbegriff des Anspruchs 1. Die Erfindung betrifft außerdem gemäß Anspruch 13 ein Verfahren zum Betrieb einer solchen generativen Fertigungseinrichtung.

Generative Fertigung ist eine umfassende Bezeichnung für die Fertigung von dreidimensionalen Objekten wie Modellen, Muster, Prototypen oder Werkzeugen. Die Fertigung erfolgt direkt auf der Basis vorgegebener Datenmodelle. Die Computerdarstellung des zu fertigenden Objekts kann beispielsweise unter Zuhilfenahme eines Computers mittels CAD-Software generiert werden. Der Computer analysiert dabei die Darstellung und erzeugt einen Höhenschichtplan des zu fertigenden Objekts, bei dem für jede Schicht ein Fertigungsraster erzeugt werden kann, aus dem ersichtlich ist, an welchen Zellen des Rasters ortselektiv Fertigungsmaterial abgelegt und verfestigt werden soll. Auf diese Weise baut die generative Fertigungseinrichtung das dreidimensionale Werkstück schichtweise auf. Derartige Fertigungsverfahren sind auch unter dem Überbegriff "Rapid Prototyping" bekannt. Rapid-Prototyping-Fertigungsverfahren setzen vorhandene Konstruktionsinformationen möglichst ohne Umwege oder Formen direkt und schnell in Werkstücke um. Anstelle von Prototypen können selbstverständlich auch andere Objekte, wie Werkzeuge oder auch Fertigteile hergestellt werden, wobei die generative Fertigung von Werkzeugen als "Rapid-Tooling" und die generative Fertigung von Werkzeugen als "Rapid-Manufacturing" bezeichnet werden. Gemeinsam ist jedoch sämtlichen Verfahren die Fertigung von dreidimensionalen Objekten nach Vorgabe vorhandener Konstruktionsinformationen, beispielsweise CAD-Daten.

Es sind verschiedene generative Fertigungsverfahren bekannt, mit denen bei unterschiedlichen Herstellungsgeschwindigkeiten unterschiedliche Werkstoffe verarbeitet werden können.

Grundsätzlich weisen die Fertigungseinrichtungen zur generativen Fertigung von dreidimensionalen Objekten mindestens einen Fertigungskopf zur Anordnung von Fertigungsmaterial auf einer Fertigungsunterlage beziehungsweise auf der Fertigungsunterlage zuvor gefertigte Materialschichten auf. Die Fertigungsunterlage, auf welcher das dreidimensionale Objekt schichtweise aufgebaut wird, und der wenigstens eine Fertigungskopf sind sowohl entsprechend einer Arbeitsrichtung in der Ebene einer Schicht als auch in der Vorschubrichtung bezogen auf die Dicke der Schichten gegeneinander verschieblich angeordnet. Beispielsweise kann der Fertigungskopf über eine Fertigungsunterlage bahnförmig bewegt werden, welche in der Ebene der Schicht unbeweglich ist, um bei jedem Überfahren des Fertigungsorts Material abzulegen.

Die generative Fertigungseinrichtung umfasst ferner eine Fixiereinheit zur Befestigung des abgelegten beziehungsweise angeordneten Fertigungsmaterials an den bereits abgelegten Materialschichten.

Selektives Lasersintern ist ein Verfahren zur Herstellung dreidimensionaler Objekte durch Sintern aus einem pulverförmigen Fertigungsmaterial. Das Fertigungsmaterial wird dabei in einem dünnen Pulverbett auf die Fertigungsunterlage beziehungsweise die darunter bereits abgelegten Materialschichten aufgebracht. Eine Fixiereinheit, welche üblicherweise ein Laser ist, wärmt das Fertigungsmaterial ortselektiv auf, entsprechend den vorgegebenen Fertigungsinformationen, so dass an den bestimmten Orten das Fertigungsmaterial gesintert wird und in einen festen Zustand überführt wird. Das Fertigungsmaterial ist dabei ein Pulver, welches mit einem oder mehreren Sinterbestandteilen gemischt wird, so dass nach dem Aufschmelzen durch die Fixiereinheit und Abkühlen der Schmelze ein festes Material entsteht. Eine generative Fertigungseinrichtung zum Lasersintern kann daher keine reinen Materialien verarbeiten, da grundsätzlich ein Sintergemisch verfestigt wird. Darüber hinaus ist der Arbeitsvorgang vergleichsweise langsam, da nach dem Aufschmelzen und Sintern ein Abkühlen der soeben bearbeiteten Materialschicht abgewartet werden muss, bevor das Pulverbett für die nächste Materialschicht aufgebracht werden kann.

Sollen Werkstücke aus einem reinen Werkstoff, das heißt ohne Bindemittel, hergestellt werden, so wird das Fertigungsmaterialpulver, beispielsweise ein Metallpulver, vollständig aufgeschmolzen. Derartige Fertigungseinrichtungen mit entsprechend starken Lasern werden dem selektiven Laserschmelzen zugeordnet.

US 2005/093 208 A1 offenbart eine generative Fertigungseinrichtung und ein Verfahren zur generativen Fertigung, wobei ein Fertigungskopf einen pulverförmigen Speicherstoff schichtweise vorlegt und ortsselektiv einen auf ultraviolettes Licht ansprechenden Initiatorstoff abzugeben. Indem die Schicht großflächig Ultraviolettlicht ausgesetzt wird, entsteht eine Querverbindung des Fertigungsmaterials nur den Bereichen, die von dem ortselektiv aufgespritzten Initiatorstoff definiert sind. Die nicht verbundenen Bereiche des Pulverbetts werden als Support-Material behandelt und entfernt.

Alternativ zu den generativen Fertigungsverfahren, welche im Kern mit ortselektivem Aufschmelzen von pulverförmigen Material in einem Pulverbett arbeiten, ist ein generatives Fertigungsverfahren ähnlich dem Funktionsprinzip eines Tintenstrahldruckers unter der Bezeichnung "Multi-jet-Modeling" oder auch "Poly-jet-Modeling" bekannt. Dabei weist ein Druckkopf mehrere linear angeordnete Düsen auf. Die Multi-Jet-Fertigungseinrichtungen verarbeiten schmelzfähige Kunststoffe, insbesondere Hartwachse, oder wachsförmige Thermoplaste, und können sehr feine Tröpfchen erzeugen. Sie erreichen dadurch hohe Oberflächengüten. Der Fertigungskopf der Poly-Jet-Fertigungseinrichtung muss jedoch motorgetrieben lange Strecken zurücklegen und arbeitet nur zeitweise am Werkstück, so dass die erreichbaren Fertigungsgeschwindigkeiten zwar für die Herstellung von Prototypen beziehungsweise Modellen ("Rapid-Prototyping") ausreichen mögen, nicht jedoch für industrielle Anwendungen mit Serien- oder Massenfertigung.

Aus US 2011/0061591 A1 ist eine generative Fertigungseinrichtung zur schichtweisen additiven Fertigung von dreidimensionalen Objekten bekannt mit einem Fertigungskopf, welcher dazu ausgebildet ist, ein metallisches Werkstück Schicht bei Schicht durch eine Vielzahl von nacheinander auf einen Fertigungstisch abgelegten Depots aus geschmolzenem Fertigungsmaterial zu formen. Er umfasst eine Materialzuführung, welche dazu ausgebildet ist, metallisches Fertigungsmaterial in Form eines Drahts zuzuführen. Eine Elektronenkanone schmilzt das zugeführte metallische Fertigungsmaterial auf. Der Fertigungsprozess läuft dabei in einer zur Evakuierung geeigneten Kammer eines Gehäuses der Fertigungseinrichtung ab. Die Elektronenkanone ist in einem einstellbaren Abstand relativ zum Fertigungstisch angeordnet, so dass ein metallisches Werkstück sukzessive aufgebaut wird.

Da der Fertigungskopf mit dem metallischen Draht mit der Elektronenkanone zusammenwirken muss und erst die nächste Arbeitsposition anfahren kann, wenn der Schmelzvorgang abgeschlossen ist, genügt die Fertigungsgeschwindigkeit der bekannten Fertigungseinrichtung nicht den Ansprüchen industrieller Anwendungen mit Serien-oder Massenfertigung.

WO 95/26871 A1 offenbart eine generative Fertigungseinrichtung, deren Fertigungskopf eine elektrostatisch aufladbare Trommel aufweist. Der Mantel der drehenden Trommel wird mit einem latenten Bild ionisiert, um an den ionisierten Stellen pulverförmiges Fertigungsmaterial über elektrostatische Anziehung aufzunehmen. Bei weiterer Drehung gibt die Trommel das Fertigungsmaterial auf einen dielektrischen Gurtförderer, der seine Fracht durch eine Einrichtung führt, in der das Pulver klebrig gemacht wird, beispielsweise durch Hitze. Die klebrige Schicht wird schließlich vom Gurtförderer über eine Fertigungsplatte gefahren und dort durch mechanischen Druck mit der Platte oder der oberen Schicht des bereits aufgeschichteten Stapels verbunden.

Der vorliegenden Erfindung liegt die Aufgabe zugrunde, eine generative Fertigungseinrichtung der gattungsgemäßen Art zu schaffen, welche eine schnelle und genaue schichtweise Fertigung dreidimensionaler Werkstücke mit der Möglichkeit der Verarbeitung mehrerer Fertigungswerkstoffe gewährleistet.

Diese Aufgabe wird erfindungsgemäß durch eine generative Fertigungseinrichtung mit den Merkmalen des Anspruchs 1 und durch ein Verfahren zum Betrieb einer solchen gemäß Anspruch 13 gelöst.

Erfindungsgemäß ist die Fixiereinheit der Fertigungseinrichtung dazu ausgebildet, an den jeweiligen Rasterpositionen das dort befindliche Fertigungsmaterial artselektiv zu fixieren. Die Fixiereinheit vermittelt dem Fertigungsmaterial ortselektiv, nämlich an der konkreten Arbeitsposition entsprechend der Rasterposition im Fertigungsraster, Energie, um das Fertigungsmaterial zu erwärmen und zu schmelzen. Die Fixiereinheit weist dabei eine solche Konfiguration auf, dass die zum Schmelzen vorgesehene Energie örtlich fokussiert aufgebracht wird und zwar exakt an den bestimmten Rasterpositionen, an denen Fertigungsmaterial zuvor ortselektiv abgelegt wurde. Mit einer ortselektiven und punktgenauen Fixierung können erheblich höhere Fixiergeschwindigkeiten erreicht werden als bei herkömmlicher Fixierung über größere Flächenabschnitte der abgelegten Materialschicht. Insbesondere erlaubt die erfindungsgemäß ortselektive Fixierung eine Konzentration der für die Fixierung zur Verfügung stehenden Energie, so dass bedarfsweise eine hohe Energiemenge aufgebracht werden muss und im Hinblick auf Energieeinsparung nur für die tatsächlich mit Fertigungsmaterial ausgestatteten Rasterpositionen aufgebracht werden muss.

Ferner ermöglicht die ortselektive Fixierung in der erfindungsgemäßen Kombination mit einer seinerseits ortselektiven Materialabgabe des Fertigungskopf nach den vorgegebenen Fertigungsrastern für die jeweilige Schicht insbesondere bei Fertigung mit verschiedenen Fertigungsmaterialen eine erheblich höhere Fertigungsgeschwindigkeit als bekannte Fertigungseinrichtungen mit Materialzuführung über ein Pulverbett.

Die Erfindung hat sich als besonders geeignet herausgestellt für Fertigungsmaterial mit aktiven Eigenschaften, wie beispielsweise antimikrobielle Eigenschaften, Schmutzresistenz, verringerte Belagbildung, leicht zu reinigende Werkstoffe, Hydrophil/Hydrophob, Oleophil/oleophob, geringes oder hohes Adhäsionsverhalten, hohe Korrosionsbeständigkeit, hohe elektrische Leitfähigkeit oder elektrische Isolation, hohe Wärmeleitfähigkeit oder Wärmeisolation, verbesserte Biokompatibilität, verbesserte oder verringerte Hochfrequenzleitfähigkeit, definiertes Reflexionsverhalten (insbesondere Licht, UV, IR, Radiowellen), Kratzfestigkeit, Härte, verbesserte Temperaturbeständigkeit, Passivschichten/Passivität, katalytische Eigenschaften, definiertes Reibungsverhalten, definiertes Vakuumverhalten, verbesserte Lötbarkeit / Schweißbarkeit, statische oder antistatische Eigenschaften, verbesserte Pigmentierbarkeit, UV Schutz, Dotierung mit Metallen, Nanopartikel und oder Nanostrukturen, Mehrschichtoberflächen, oder Multifunktionsoberflächen.

Gemäß der Erfindung ist die Fixiereinheit mittels einer auf sie wirkenden Steuereinheit nach den Fertigungsrastern für die jeweilige Schicht steuerbar. Die Steuereinheit ist dabei dazu ausgebildet, entsprechend dem vorgegebenen Fertigungsraster für die aktuell zu fertigende Materialschicht Rasterpositionen und/oder Leistungsinformationen für die Fixiereinheit zu ermitteln. Die Steuereinheit gibt der Fixiereinheit Rasterpositionen entsprechend dem Fertigungsraster vor, an denen die Fixiereinheit ortselektiv aktiviert wird und auf das punktuell abgelegte Fertigungsmaterial einwirkt.

Vorteilhaft gibt die Steuereinheit der Fixiereinheit nicht nur Rasterpositionen vor, an denen an denen die Fixiereinheit aktiviert wird und somit Fertigungsmaterial geschmolzen und fixiert werden soll, sondern auch eine Energieanforderung, welche mit der jeweiligen Rasterposition im Fertigungsraster verknüpft ist, also für diese Rasterposition vorgesehen ist. Die Energieanforderung enthält dabei Information zur angeforderten Leistung einer Energiequelle der Fixiereinheit und/oder zur zeitlichen Dauer der Einwirkung der Fixiereinheit auf das Fertigungsmaterial. Die Erfindung erlaubt dadurch eine schnelle Fertigung von Objekten, welche aus mehreren Materialen bestehen. Die Energieanforderung ist dabei auf physikalische Eigenschaften des konkret zu fixierenden Materials abgestimmt, beispielsweise dessen Schmelzpunkt. Ferner berücksichtigt die Bestimmung der Energieanforderung eine bestimmte Oberflächenqualität nach der Fixierung oder ähnliche Eigenschaften. Durch ortselektive Ablage von Fertigungsmaterial und deren ebenso ortselektive Fixierung unter zusätzlicher Berücksichtigung individueller Energieanforderung, lassen sich beispielsweise unterschiedliche Materialien mit einem Schmelzpunkt über 500°C und/oder Schmelzpunktunterschieden von mehr als 100°C bis 500°C fixieren. Ferner sind auch Materialen mit Schmelzpunktunterschieden von weniger als 10°C ortselektiv und präzise mit geeigneter Steuerung des Energieeintrags an der zu fixierenden Rasterposition unter Berücksichtigung des Schmelzpunkts des jeweiligen Materials realisierbar.

Gemäß der Erfindung ist eine rasche und genaue Befestigung des Fertigungsmaterials auf der Fertigungsunterlage beziehungsweise bereits abgelegten Materialschichten gegeben, wenn die Fixiereinheit des Fertigungskopfs einen Laser und eine dem Laser zugeordnete, optische Umlenkeinrichtung umfasst. Die Umlenkeinrichtung ist vorzugsweise ein rotierender Spiegel, insbesondere ein hexagonaler Spiegel, welcher nach Art eines Laserscanners den Laserstrahl des Lasers auf die zu fixierenden Stellen umlenkt. Dabei erwärmt der Laserstrahl die ortselektiv angesteuerten Stellen und schmilzt das dort befindliche Fertigungsmaterial, welches anschließend abkühlt und Teil des zu fertigenden Werkstücks wird. Als vorteilhafte und geeignete Alternativen zu einem Laser haben sich Fixiereinheiten mit ortselektiv im Ultraviolettbereich wirkenden Lichtquellen herausgestellt. Als alternative Wärmequellen sind Infrarot oder Mikrowellenquellen geeignet, insbesondere fokussierte Mikrowellenquellen, z.B. Plasmalaser.

Durch die erfindungsgemäß ortselektive Fixierung des Fertigungsmaterials ist mit einem Laser als Energiequelle eine sehr punktgenaue Fertigung mit kleinen Abständen der Rasterpositionen im Fertigungsraster möglich, auch mit Rasterweiten von weniger als einem Zentimeter. Dabei können materialreine Objekte gefertigt werden, wenn sortenreines Fertigungsmaterial, beispielsweise ein Metallpulver, abgelegt und durch den Laserstrahl geschmolzen wird. Die Erfindung gewährleistet für die Verarbeitung auch unterschiedlicher Fertigungsmaterialien Abständen der Rasterposition von weniger als einem Millimeter. Dabei ermöglicht die Erfindung auch Abstände von weniger als 0,1mm. Auch Abstände von weniger als 0,05mm zu einem der anderen Materialien werden in der angegebenen Ausführungsform der Erfindung realisierbar. Durch die erfindungsgemäß ortselektive Fixierung des Fertigungsmaterials ist insbesondere in der Ausführungsform mit einem Laser als Energiequelle wird der realisierbare Fertigungsabstand von beispielsweise 0,1 mm auch im dreidimensionalen Raum berücksichtigt. Es können durch die erfindungsgemäße ortselektive Fixierung auch sehr dünne Materialschichten aufgetragen werden. Die Schichtdicke der zu fertigen Materialschichten ist bei der Bestimmung der ortselektiven Fertigungsinformationen durch eine Fertigungssoftware mit den Rasterpositionen für die ortselektive Fertigung und der ortselektiven Energieanforderung für eine Fixierung abgestimmt. In einer vorteilhaften Ausführungsform der Erfindung wird ein bereits urgeformt der Fertigungseinrichtung vorgelegter Körper mit der gewünschten Schichtdicke beschichtet.

In einer vorteilhaften Ausführungsform ist der Fertigungskopf dazu ausgebildet ist, Fertigungsmaterial im Siebdruck abzugeben auf die Fertigungsunterlage bzw. die bereits abgelegten Materialschichten. Der Fertigungskopf hat demnach eine derartige Konfiguration und Ausstattung, welche ihm dazu dient, im Siebdruckverfahren Fertigungsmaterial gemäß den vorgegebenen Fertigungsrastern für die jeweilige Schicht ortselektiv abzugeben. Der Fertigungskopf umfasst dabei vorteilhaft ein feinmaschiges Gewebe oder Sieb, durch welches das Fertigungsmaterial auf die Fertigungsunterlage oder die bereits abgelegte Schicht durchgedrückt wird. Hierzu dient beispielweise eine Gummiwalze oder Ähnliches. Die Maschengröße des Siebs ist dabei mit dem vorgesehenen Fertigungsraster abgestimmt.

Alternativ zur Materialzuführung im Siebdruck ist der Fertigungskopf in einer weiteren Ausführungsform dazu ausgebildet, Fertigungsmaterial ortselektiv im Offsetdruck abzugeben. Als besonders geeignet wird dabei das wasserlose Offsetdruckverfahren gesehen.

In einer weiteren vorteilhaften Ausführungsform eines Verfahrens zum Betrieb einer generativen Fertigungseinrichtung wird unter bestimmten Umgebungsbedingungen wie bestimmtem Druck, Temperatur oder Atmosphäre, gefertigt, um optimale Fertigungsergebnisse zu erzielen. Dadurch ist auch der Anwendungsbereich der Erfindung erweitert und sind auch empfindliche Werkstoffe verarbeitbar. Beispielsweise wird hierzu in einer vorteilhaften Ausführungsform ein Unterdruck im Fertigungsbereich geschaffen und bei Unterdrücken von weniger als 0,1 Bar gefertigt. Alternativ oder zusätzlich wird durch gezielte Konfiguration der Fertigungsatmosphäre der Fertigungsprozess gefördert. Die Konfiguration kann dabei eine Schutzatmosphäre mit Gasen wie CO2, Ar, He, Ne, Xe, N vorsehen. Ferner berücksichtigt die Fertigungsatmosphäre in bestimmten Fertigungssituationen Funktionsatmosphären, das heißt solche Konfigurationen, bei denen die Anwesenheit bestimmter Stoffe und/oder thermodynamische Bedingungen den ortselektiven Fertigungsprozess mit bestimmten Fertigungsmaterialien gefördert oder sogar erst ermöglicht wird.

In einer besonders bevorzugten Ausführungsform der Erfindung ist eine derartige Ausbildung des wenigstens einen Fertigungskopfs vorgesehen, dass das Fertigungsmaterial nach dem Prinzip der Elektrofotografie ortselektiv aufnehmbar und zur Fertigungsunterlage transportierbar ist. Das Arbeitsprinzip der Elektrofotografie ist zwar aus der Anwendung bei zweidimensionalen Laserdruckern bekannt. Diese Ausführungsform hat aber erkannt, dass durch das Arbeitsprinzip der Elektrofotografie eine erheblich höhere Fertigungsgeschwindigkeit bei größtmöglicher Genauigkeit erreicht werden kann. Im Vergleich zum selektiven Laserschmelzen ist eine wesentlich höhere Fertigungsgeschwindigkeit gegeben, da der Fertigungswerkstoff nicht Schicht für Schicht erwärmt werden muss. Ferner ist der Verlust von Fertigungsmaterial insbesondere bei verschiedenen Fertigungswerkstoffen erheblich reduziert, da keine Verunreinigungen entstehen.

Der Fertigungskopf der Fertigungseinrichtung weist eine elektrofotografische Bildtrommel auf, welche an ihrem Mantel einen Fotoleiter trägt und im Bereich einer Materialübergabe des Fertigungskopfs gegenüber der Fertigungsunterlage frei liegt. Die Bildtrommel ist dabei ein drehbar gelagertes Bauteil, welches sich in seiner Achsrichtung quer zur Arbeitsrichtung des Fertigungskopfs erstreckt. Im Betrieb der Fertigungseinrichtung wird die Bildtrommel in einer Arbeitsdrehrichtung bewegt und über der Fertigungsunterlage abgewälzt. Dabei werden ortselektiv kleine Materialmengen zum Fertigungsort transportiert und dort abgelegt, welche zuvor nach dem Prinzip der Elektrofotografie an dem Fotoleiter der Bildtrommel platziert werden. Die Fertigungsunterlage ist eine im Wesentlichen horizontale Einrichtung der Fertigungseinrichtung, auf der das dreidimensionale Objekt durch Ablage und Verfestigung von Fertigungsmaterial schichtweise aufgebaut wird. Vorteilhaft bildet der Arbeitstisch der Fertigungseinrichtung die Fertigungsunterlage. In einer für Serien- oder Massenfertigung konfigurierten Ausführungsform der generativen Fertigungseinrichtung bildet ein Gurtförderer die Fertigungsunterlage, auf der stetig weitere Fertigungsorte zum schichtweisen additiven Aufbau dreidimensionaler Objekte in den Arbeitsbereich der Fertigungsköpfe bewegbar ist.

Ist der Bildtrommel eine Heizeinrichtung zugeordnet, so wird der Fertigungswerkstoff vor der Übergabe an die Fertigungsunterlage erwärmt und somit der Energieaufwand für den Schmelzvorgang im Rahmen der Fixierung reduziert. Vorteilhaft ist die Bildtrommel von der Heizeinrichtung auf einem im Wesentlichen konstanten Temperaturniveau gehalten, wobei das Temperaturniveau vorteilhaft einstellbar ist.

Die Fertigungseinrichtung weist außerdem eine elektrische Konditioniereinrichtung zur elektrostatischen Aufladung des Fotoleiters der Bildtrommel und wenigstens eine Belichtungseinheit auf. Die Belichtungseinheit umfasst dabei Mittel zur ortselektiven Belichtung des Fotoleiters der Bildtrommel entsprechend den vorgegebenen Fertigungsinformationen für das dreidimensionale Objekt bzw. Produkt. Die Belichtungseinheit ist dabei in Arbeitsdrehrichtung der Bildtrommel der elektrischen Konditioniereinheit nachgeordnet. Im Betrieb der Fertigungseinrichtung lädt die Konditioniereinheit den ihr zugewandten Abschnitt der Bildtrommel elektrostatisch auf. Hierzu umfasst die Konditioniereinrichtung vorteilhaft Koronadrähte, das heißt dünne, nahe der Bildtrommel angebrachte Drähte, welche unter hohe Spannung gesetzt werden und eine Koronaentladung erzeugen. In einer alternativen Ausführungsform der Erfindung umfasst die Konditioniereinrichtung eine Reihe von Punktladedioden, welche parallel zur Achsrichtung der Bildtrommel angeordnet sind und die jeweils zugewandt liegende Mantellinie des Fotoleiters elektrostatisch aufladen. Die Punktladedioden sind solche Dioden, deren Emission für eine lokale Ionisierung bzw. elektrostatische Aufladung ausreicht. Mehrere nebeneinander in einer Reihe angeordnete Punktladedioden wirken somit gemeinsam auf eine Mantellinie des Fotoleiters ein. Wird die Bildtrommel weiter gedreht, wird die jeweils nachfolgende Mantellinie elektrostatisch aufgeladen.

Nach der Konditionierung des Fotoleiters belichtet die Belichtungseinheit den Fotoleiter entsprechend den vorgegebenen Fertigungsinformationen. Dabei kann in einer vorteilhaften Ausführungsform die Belichtung an den Stellen gelöscht werden, an denen später Fertigungsmaterial auf die Bildtrommel aufgetragen werden soll. An den belichteten Stellen wird der Fotoleiter leitend und verliert dadurch seine Ladung. In einer alternativen Ausführungsform belichtet die Belichtungseinheit ein negatives Druckbild, wobei ortselektiv diejenigen Stellen belichtet werden, welche später kein Fertigungsmaterial aufnehmen sollen.

Der Fertigungskopf weist außerdem einen der Belichtungseinheit in Arbeitsdrehrichtung der Bildtrommel nachfolgend angeordnete Entwicklereinheit auf, welche wenigstens eine elektrostatisch aufladbare Transferwalze zur Bereitstellung von Fertigungsmaterial auffasst. Die wenigstens eine Transferwalze ist parallel zur Bildtrommel angeordnet. Jede Transferwalze führt über elektrostatische Kräfte gehaltene Fertigungsmaterialmengen an ihrem Mantel einer Oppositionslage zu, an welcher der Mantel der Bildtrommel und der Mantel der Transferwalze im kürzesten Abstand zueinander benachbart liegen. In dieser Oppositionslage wird an denjenigen Stellen der Bildtrommel, welche zuvor von der Belichtungseinheit nicht belichtet wurden, Fertigungsmaterial von der Transferwalze an die Bildtrommel übergeben. In einer Ausführungsform der Erfindung erzeugt die Belichtungseinheit ein positives Druckbild auf dem Fotoleiter, wobei das Fertigungsmaterial an der Transferwalze negativ ionisiert wird. In einer Ausführungsform mit negativer Druckbilderzeugung wird das Fertigungsmaterial positiv ionisiert.

Schließlich umfasst der Fertigungskopf in einer Ausführungsform der Erfindung eine in Arbeitsdrehrichtung der Bildtrommel vor der Materialübergabe zur Fertigungsunterlage angeordnete und in Richtung der Fertigungsunterlage wirkende elektrische Unterlagenkonditionierung. Die Unterlagenkonditionierung umfasst dabei in einer vorteilhaften Ausführungsform Koronadrähte. In einer weiteren Ausführungsform umfasst die Unterlagenkonditionierung eine Reihe von Punktladedioden, welche quer zur Arbeitsrichtung des Fertigungskopfs angeordnet sind und beim Überfahren des Bauorts beziehungsweise der am Fertigungsort bereits auf der Fertigungsunterlage abgelegte Materialschichten aktiviert werden. Die elektrische Ladung, welche die Unterlagenkonditionierung erzeugt, ist betragsmäßig größer als die Ladung des Fotoleiters auf der Bildtrommel, so dass in der Oppositionslage der Bildtrommel an der Materialübergabe die auf der Bildtrommel mitgeführten Materialmengen von der Bildtrommel gelöst werden und am vorgesehenen Fertigungsort auf die Fertigungsunterlage beziehungsweise die darauf bereits abgelegten Materialschichten übergeben wird.

In einer vorteilhaften Ausführungsform der Erfindung sind die der Bildtrommel zugeordnete Konditioniereinheit und/oder die Unterlagenkonditionierung entweder zur Erzeugung einer negativen elektrostatischen Aufladung oder zur Erzeugung einer positiven elektrostatischen Aufladung ausgebildet. Dadurch ist die Anzahl der über das Prinzip der elektrofotografischen Beförderung und Fixierung in der jeweiligen Schicht verarbeitbaren Fertigungsstoffe deutlich erweitert. Die Konditioniereinheit und/oder die Unterlagenkonditionierung sind dabei für eine Polung der elektrostatischen Aufladung eingestellt, welche dem gewählten Fertigungswerkstoff am Besten entspricht. Vorteilhaft sind Konditioniereinheit und/oder die Unterlagenkonditionierung zwischen einer Einstellung zur Erzeugung einer negativen elektrostatischen Aufladung und einer Einstellung zur Erzeugung einer positiven elektrostatischen Aufladung umschaltbar ausgebildet.

In der bereits erwähnten Ausführungsform der Erfindung mit Erzeugung eines positiven Druckbilds auf dem Fotoleiter und negativer Ionisierung des Fertigungsmaterials an der Transferwalze ist die Unterlagenkonditionierung derart ausgebildet und eingestellt, dass eine positive Ladung erzeugbar ist.

In der Ausführungsform der Erfindung mit Erzeugung eines negativen Druckbilds auf dem Fotoleiter und negativer Ionisierung des Fertigungsmaterials an der Transferwalze ist die Unterlagenkonditionierung derart ausgebildet und eingestellt, dass eine negative Ladung erzeugbar ist. In beiden Ausführungsformen sind die Unterlagenkonditionierungen derart konfiguriert, dass ein Betrag der durch die Unterlagenkonditionierung erzeugbaren elektrischen Ladung größer ist als ein Betrag der von der Konditioniereinheit erzeugbaren Ladung des Fotoleiters am Umfang der Bildtrommel, so dass die ortselektive Übergabe des Fertigungsmaterials von der Bildtrommel zur Fertigungsunterlage oder den auf der Fertigungsunterlage bereits abgelegten Materialschichten des Werkstücks gewährleistet ist.

Um eine Ionisierung des Baumaterials an der Transferwalze zu gewährleisten, ist der Transferwalze eine Ladeeinheit zugeordnet. Die Ladeeinheit erzeugt dabei elektrostatische Kräfte am Mantel der Transferwalze, welche Fertigungsmaterial während des Transports zur Bildtrommel festhalten. Insbesondere für die Verarbeitung metallischer Werkstoffe ist die Zuführung von Fertigungsmaterial über eine elektrische Influenzeinrichtung vorteilhaft, welche im welche zur Erzeugung eines elektrischen Feldes im Förderweg des Fertigungsmaterials zur Transferwalze ausgebildet ist. Die Influenzeinrichtung ist dabei eine Einrichtung, welche mittels eines elektrischen Feldes durch Influenz auf das zugeführte Fertigungsmaterial einwirkt. Dabei werden an der Oberfläche der Materialpartikel Ladungen verschoben und ortsabhängigen Ladungsdichten erzeugt. Dieses physikalische Phänomen wird als Influenz oder elektrostatische Induktion bezeichnet. Die Influenzeinrichtung ist daher zur Erzeugung eines elektrischen Feldes im Förderweg des Fertigungsmaterials ausgebildet und umfasst eine elektrische Spannungsquelle zur Erzeugung eines elektrisches Feldes.

In einer kompakten und zuverlässigen Ausführungsform umfasst die Influenzeinrichtung ein beschaufeltes Förderrad, dessen Schaufeln elektrisch isoliert sind und zwischen einer Beschickungsstellung und einer Abgabestellung das elektrische Feld einer elektrischen Spannungsquelle passieren.

Um das zugeführte Fertigungsmaterial sicher aufnehmen zu können ist die Transferwalze mit der jeweils anderen Polarität wie die Influenzeinrichtung elektrisch aufgeladen.

In einer bevorzugten Ausführungsform umfasst die Entwicklereinheit mehrere Transferwalzen für jeweils unterschiedliche Fertigungsmaterialien, welche an einem drehbaren Transferkarussell derart gehalten sind, dass jeweils eine Transferwalze in eine aktive Stellung benachbart der Bildtrommel bewegbar ist. Das Transferkarussell ist hierzu mittels eines Antriebs nach Art eines Revolvers in Schritten verstellbar. Auf diese Weise können Objekte mit unterschiedlichen Materialien gefertigt werden, wobei auch innerhalb einer Schicht, nämlich durch kurzzeitiges Verdrehen des Transferkarussells unterschiedliche Materialien eingebaut werden können. Dabei ist auch die Bildung von Legierungen möglich.

Gemäß der Erfindung umfasst die Belichtungseinheit als Mittel zur ortselektiven Belichtung des Fotoleiters der Bildtrommel einen Laser, insbesondere einen gepulsten Laser wie beispielsweise einen CO2-Laser, und eine dem Laser zugeordnete Umlenkeinrichtung. Die optische Umlenkeinrichtung ist dabei vorzugsweise ein rotierender Spiegel, insbesondere ein hexagonaler Spiegel, welcher nach Art eines Laserscanners den Laserstrahl des Lasers zeilenweise auf die Bildtrommel lenkt. Der Laser wird gemäß den vorgegebenen Fertigungsrastern für die jeweilige Schicht ein und ausgeschaltet. Aufgrund der Belichtung des Fotoleiters mittels eines Lasers können sehr hohe Fertigungsgeschwindigkeiten erreicht werden, so dass die erfindungsgemäße Fertigungseinrichtung nicht nur zur Herstellung von Prototypen, sondern vielmehr auch für industrielle Serien oder Massenfertigungen geeignet ist.

In einer alternativen Ausführungsform, die nicht zu der Erfindung gehört, weist die Belichtungseinheit als Mittel zur ortselektiven Belichtung des Fotoleiters der Bildtrommel in Achsrichtung der Bildtrommel aneinander gereihte Lichtquellen auf. Die einzelnen Lichtquellen sind dabei selektiv ansteuerbar, gemäß den vorgegebenen Fertigungsrastern, so dass auf dem Fotoleiter das gewünschte Druckbild vor der Bestückung des Fotoleiters über die Entwicklereinheit erzeugbar ist. Die selektiv ansteuerbaren Lichtquellen sind dabei vorzugsweise Leuchtdioden.

Vorteilhaft ist in einem zwischen der Materialübergabe der Bildtrommel und der Konditioniereinheit liegenden Rücklaufabschnitt der Bildtrommel eine Reinigungseinheit angeordnet. Die Reinigungseinheit ist vorteilhaft ein Materialabstreifer, welcher mit einem möglichst kleinen Spalt am Mantel der Bildtrommel angeordnet ist, so dass gegebenenfalls verbleibende Materialreste vom Umfang der rotierenden Bildtrommel abgenommen werden. Nach der Übergabe des Fertigungsmaterials von der Bildtrommel auf die Fertigungsunterlage beziehungsweise die darauf bereits gefertigten Materialschichten verbleiben gegebenenfalls noch Materialreste am Mantel der Bildtrommel, welche während des Rücklaufs zur Konditioniereinheit, wo die Bildtrommel für die nächsten Arbeitszyklus konditioniert wird, gereinigt wird.

Vorteilhaft weist der Fertigungskopf für eine erste Arbeitsrichtung eine erste Ausstattung mit jeweils mindestens einer Konditioniereinheit, Belichtungseinheit, Entwicklereinheit, Unterlagenkonditionierung und Fixiereinheit auf und für eine der ersten Arbeitseinrichtung entgegengesetzte zweite Arbeitsrichtung eine zweite Ausstattung auf. Die zweite Ausstattung umfasst entsprechend jeweils mindestens eine Konditioniereinheit, eine Belichtungseinheit, eine Entwicklungseinheit, eine Unterlagenkonditionierung und eine Fixiereinheit, welche im Wesentlichen symmetrisch zur ersten Ausstattung angeordnet ist. Auf diese Weise ist die Arbeitsgeschwindigkeit verdoppelt, in dem nach Abschluss eines Bearbeitungszyklus die Arbeitsbewegung des Fertigungskopfs in der Ebene der Schichten geändert wird und die Drehrichtung der Bildtrommel ebenfalls gewechselt wird. Die erste Ausstattung und die zweite Ausstattung sind alternativ aktivierbar, wobei die jeweiligen Arbeitsdrehrichtungen der Bildtrommel entgegen gesetzt sind.

In einer weiteren vorteilhaften Ausführungsform der Erfindung umfasst die Fertigungseinrichtung wenigstens einen Fertigungskopf als Hauptfertigungskopf für das Fertigungsmaterial und einen weiteren Fertigungskopf als Stützfertigungskopf für Stützmaterial, welcher koordiniert mit dem Hauptfertigungskopf ansteuerbar ist. Der Stützfertigungskopf ordnet dabei Stützmaterial innerhalb der jeweils zu erzeugenden Materialschichten ab, welches zur Stützung der jeweils nachfolgenden Materialschicht vorgesehen ist. Das Stützmaterial ermöglicht die Ausbildung von Hinterschnitten und dergleichen. Das Stützmaterial wird nach der Fertigung des dreidimensionalen Objekts entfernt, beispielsweise durch eine Wasserspülung.

Vorteilhaft entspricht der Stützfertigungskopf bezüglich der Anordnung von Bildtrommel, Konditioniereinheit, Belichtungseinheit, Entwicklereinheit und Unterlagenkonditionierung dem Hauptfertigungskopf. Der Stützfertigungskopf arbeitet mit einer ähnlichen Arbeitsgeschwindigkeit wie der Hauptfertigungskopf, so dass insgesamt eine hohe Arbeitsgeschwindigkeit gegeben ist. Die Fixiereinheit des Stützfertigungskopfs ist dabei vorteilhaft eine Wärmequelle, beispielsweise eine Ultraviolettlampe.

In einer Ausführungsform ist die Fixiereinheit des Hauptfertigungskopfs anstelle einer schmelzenden Einrichtung, beispielsweise eines Lasers, mit einer Wärmequelle, beispielsweise einer oder mehreren Ultraviolettlampen versehen. Dadurch sind bestimmte Fertigungswerkstoffe, welche bspw. flüssig aufgebracht werden oder zur Verfestigung polymerisiert werden, fixierbar.

Weitere Merkmale ergeben sich aus den Unteransprüchen. Die Erfindung ist nachstehend anhand der Zeichnung näher erläutert. Es zeigen:
Fig. 1 eine perspektivische Darstellung eines ersten Ausführungsbeispiels einer generativen Fertigungseinrichtung,
Fig. 2 eine perspektivische Darstellung eines zweiten Ausführungsbeispiels einer generativen Fertigungseinrichtung,
Fig. 3 einen Querschnitt eines Ausführungsbeispiels eines Hauptfertigungskopfs für eine generative Fertigungseinrichtung gemäß Fig. 1 oder 2,
Fig. 4 einen Querschnitt eines Ausführungsbeispiels eines Stützfertigungskopfs für eine generative Fertigungseinrichtung gemäß Fig. 1 oder Fig. 2,
Fig. 5 einen Querschnitt eines weiteren Ausführungsbeispiels eines Hauptfertigungskopfs für eine generative Fertigungseinrichtung gemäß Fig. 1 oder Fig. 2,
Fig. 6 einen Querschnitt eines weiteren Ausführungsbeispiels eines Stützfertigungskopfs für eine generative Fertigungseinrichtung gemäß Fig. 1 oder Fig. 2.
Fig. 7 einen Querschnitt eines Ausführungsbeispiels einer Influenzeinrichtung zur Zuführung von Fertigungsmaterial.

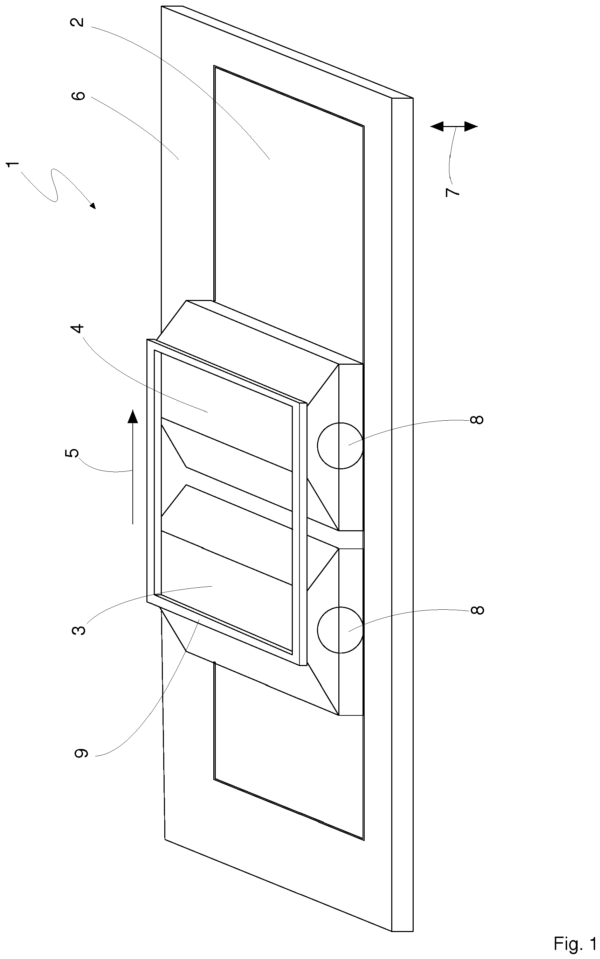

Fig. 1 zeigt eine vereinfachte Darstellung einer generativen Fertigungseinrichtung 1 zur schichtweisen additiven Fertigung von dreidimensionalen Objekten. Unter einer additiven Fertigung wird dabei verstanden, dass Fertigungsmaterial auf einer Fertigungsunterlage 2 der Fertigungseinrichtung 1 angehäuft wird beziehungsweise dem dort bereits liegenden Fertigungsmaterial hinzugefügt wird. Die Fertigungsunterlage 2 ist der im Wesentlichen horizontale Arbeitstisch der Fertigungseinrichtung, auf dem das dreidimensionale Objekt durch Ablage und Verfestigung von Fertigungsmaterial schichtweise aufgebaut wird.

Die Fertigungseinrichtung 1 umfasst mindestens einen Fertigungskopf 3, 4 zur ortselektiven Anordnung von Fertigungsmaterial auf der Fertigungsunterlage 2. Im gezeigten Ausführungsbeispiel umfasst die Fertigungseinrichtung einen Hauptfertigungskopf 3 zur ortselektiven Anordnung von Fertigungsmaterial und einen Stützfertigungskopf 4, zur Anordnung von Stützmaterial, welches während der Fertigung zur Stützung der nachfolgend aufzutragenden Materialschichten angebracht wird und nach der Beendigung der Fertigung des Werkstücks entfernt wird. Das Stützmaterial erlaubt dabei die einfache und genaue Fertigung von Hinterschnitten.

Die Fertigungsköpfe 3, 4 sind entsprechend einer Arbeitsrichtung 5 in der Ebene einer Schicht beziehungsweise einer Ebene der Fertigungsunterlage 2 bewegbar angeordnet. Die Fertigungsköpfe 3, 4 werden im Betrieb der Fertigungseinrichtung 1 über der Fertigungsunterlage 2 hin und her bewegt, wobei Material innerhalb eines Arbeitsbereichs 6 auf der Fertigungsunterlage beziehungsweise den darauf bereits abgelegten Materialschichten angeordnet werden kann. Der Hauptfertigungskopf 3 und der Stützfertigungskopf 4 werden dabei koordiniert über die Fertigungsunterlage 2 gefahren, was in der Darstellung durch die Verbindung durch einen starren Rahmen 9 symbolisiert ist. Die Fertigungsköpfe 3, 4 können in der Fertigungseinrichtung in einem gemeinsamen Gehäuse untergebracht sein.

Die Fertigungsköpfe 3, 4 und die Fertigungsunterlage sind einerseits in der Arbeitsrichtung 5 relativ zueinander verschieblich angeordnet. Anderseits sind die Fertigungsunterlage 2 und die Fertigungsköpfe 3, 4 in einer Vorschubrichtung 7 bezogen auf die Dicke der Schichten gegeneinander verschieblich angeordnet. Auf diese Weise wird nach jedem Arbeitszyklus, das heißt dem Auftragen einer Materialschicht, der Abstand zwischen den Fertigungsköpfen 3, 4 und der Fertigungsunterlage 2 um den Betrag einer Schichtdicke vergrößert. Vor jedem Arbeitsgang der Fertigungsköpfe 3, 4 ist somit der Abstand zwischen den Fertigungsköpfen 3, 4 und der jeweils oben liegenden Materialschicht des noch unvollendeten dreidimensionalen Werkstücks auf der Fertigungsunterlage 2 stets gleich.

Im gezeigten Ausführungsbeispiel wird die Arbeitsbewegung in Arbeitsrichtung 5 durch eine Bewegung der Fertigungsköpfe 3, 4 über der Fertigungsunterlage 2 realisiert. Die Fertigungsunterlage 2 ist in Vorschubrichtung 7 einstellbar und bewegbar. In weiteren, nicht gezeigten Ausführungsbeispielen wird die Relativbewegung zwischen den Fertigungsköpfen 3, 4 und der Fertigungsunterlage 2 in Vorschubrichtung 7 durch die Fertigungsköpfe 3, 4 ausgeführt. In einem weiteren, nicht gezeigten, Ausführungsbeispiel ist die Fertigungsunterlage 2 in Arbeitsrichtung 5 bewegbar, während die Fertigungsköpfe 3, 4 fest angeordnet sind.

Die Fertigungsköpfe 3, 4 sind dazu ausgebildet, Fertigungsmaterial ortselektiv auf der Fertigungsunterlage 2 beziehungsweise dem darauf liegenden Fertigungsmaterial anzuordnen. Die additive Anordnung des Fertigungsmaterials kann auf den bereits auf der Fertigungsunterlage 2 bereits abgelegten Materialschichten und/oder auf einem bereits vorgefertigten Körper abgelegt und fixiert werden. In der letztgenannten Ausführungsform werden entsprechende Werkstücke beschichtet. Unter der ortselektiven Anordnung wird dabei verstanden, dass für jede Materialschicht des zu fertigenden Objekts ein Fertigungsraster vorgegeben wird, in welchem die zur Ablage von Fertigungsmaterial vorgesehenen Stellen beziehungsweise im Fall des Stützfertigungskopf die zur Ablage von Stützmaterial vorgesehenen Stellen bezeichnet sind, und das Material an den derart vorbestimmten Stellen angeordnet wird. Die Fertigungsraster werden von einer nicht dargestellten Steuereinheit auf der Grundlage von vorgegebenen Konstruktionsdaten, beispielsweise aus einer CAD-Software, ermittelt und die Fertigungsköpfe 3, 4 von einer nicht dargestellten Steuereinheit entsprechend angesteuert.

Jeder Fertigungskopf 3, 4 weist wenigstens eine nachstehend noch näher erläuterte Bildtrommel 8 auf, welche an ihrem Umfang entsprechend den vorgegebenen Fertigungsrastern mit Fertigungs- beziehungsweise Stützmaterial bestückbar sind und während der Arbeitsbewegung über der Fertigungsunterlage 2 abgewälzt werden. Jeweils diejenige Mantellinie der Bildtrommeln 8, welche in Opposition zur Fertigungsunterlage 2 liegen, geben Fertigungs- beziehungsweise Stützmaterial an die Fertigungsunterlage 2 beziehungsweise die darauf bereits abgelegten Materialschichten ab.

Die Erfindung ist nicht auf Fertigungseinrichtungen mit Hauptfertigungsköpfen 3 und Stützfertigungsköpfen 4 beschränkt. In weiteren Ausführungsbeispielen sind ein einzelner Hauptfertigungskopf oder mehrere Hauptfertigungsköpfe angeordnet, so dass verschiedene Fertigungsmaterialien eingesetzt werden können.

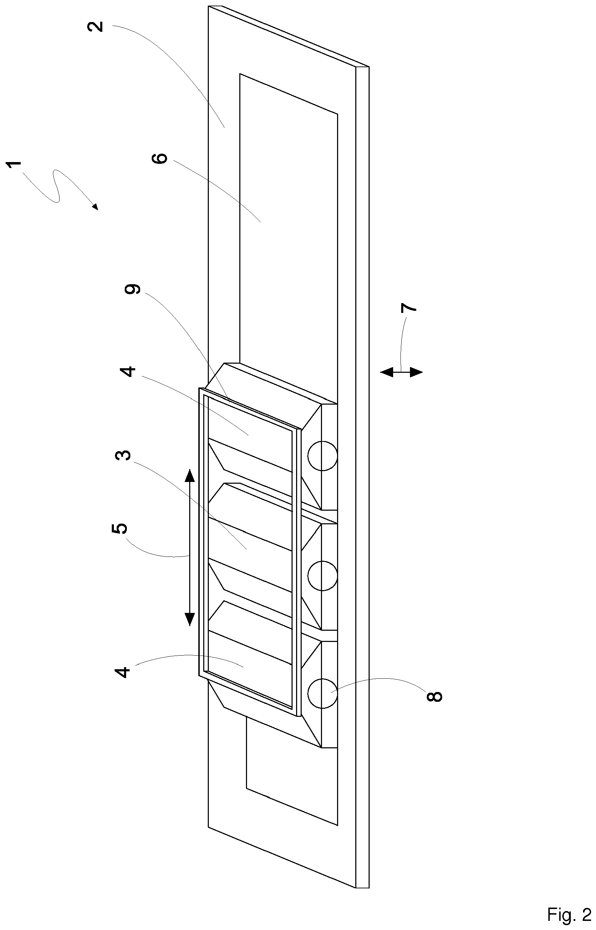

Ein weiteres bevorzugtes Ausführungsbeispiel einer erfindungsgemäßen Fertigungseinrichtung 1' ist in Fig. 2 gezeigt. Die Fertigungseinrichtung 1' entspricht in ihrem Aufbau bis auf die nachfolgend erläuterten Unterschiede dem Aufbau der Fertigungseinrichtung 1 gemäß Fig. 1. Für gleiche Bauteile sind dabei die gleichen Bezugszeichen verwendet.

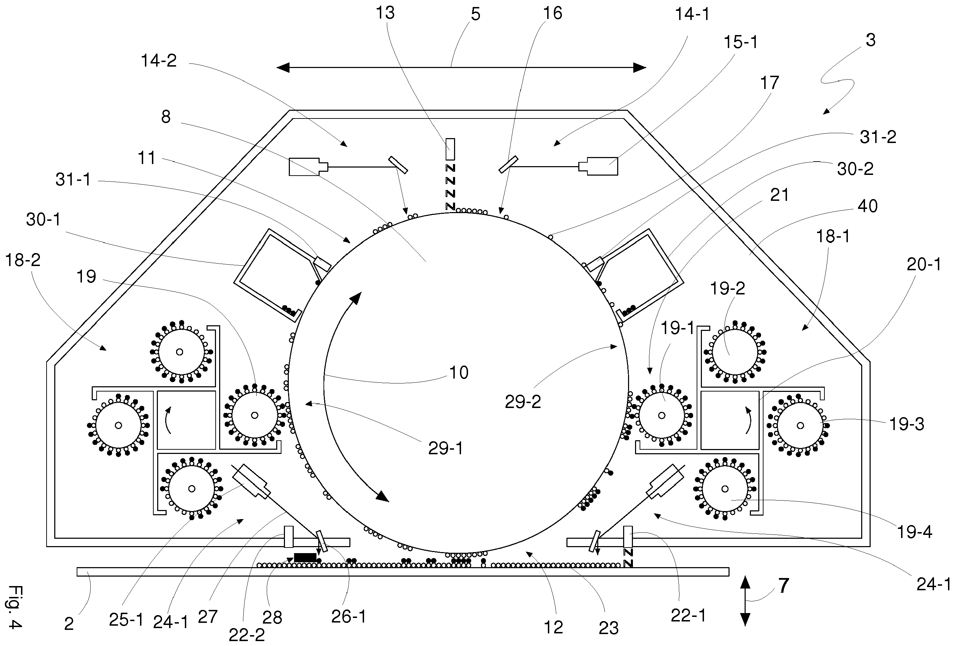

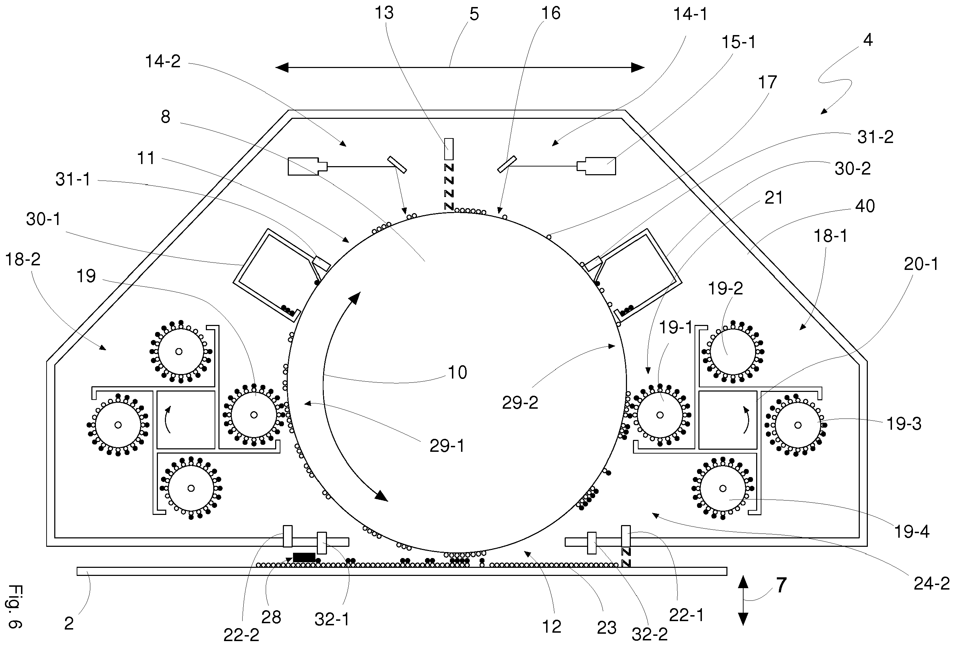

Die Fertigungseinrichtung 1' gemäß Fig. 2 weist einen Hauptfertigungskopf 3 und zwei Stützfertigungsköpfe 4, 4' auf, welche beiderseits des Hauptfertigungskopfs 3 an dem Rahmen 9 befestigt sind. Die Arbeitsbewegung des Hauptfertigungskopfs 3 ist somit über dem Rahmen 9 mit der Arbeitsbewegung der Stützfertigungsköpfe 4,4' gekoppelt, so dass sämtliche Fertigungsköpfe 3, 4, 4' synchron den Arbeitsbereich 6 bestreichen. Die Fertigungsköpfe sind dazu ausgebildet, in beiden Arbeitsrichtungen 5, das heißt in entgegen gesetzten Richtungen der Arbeitsbewegung Material auftragen zu können, wie nachfolgend anhand von Fig. 4 und Fig. 6 beschrieben ist. Dadurch wird in jeder Arbeitsbewegung Fertigungs- und Stützmaterial auf der Fertigungsunterlage beziehungsweise den darauf bereits abgelegten Materialschichten abgelegt, so dass eine Verdopplung der Fertigungsgeschwindigkeit der Fertigungseinrichtung 1' gegeben ist. Am Ende einer Arbeitsbewegung wird die Arbeitsrichtung 5 gewechselt und die Fertigungsköpfe 3, 4, 4' in die entgegengesetzte Richtung bewegt.

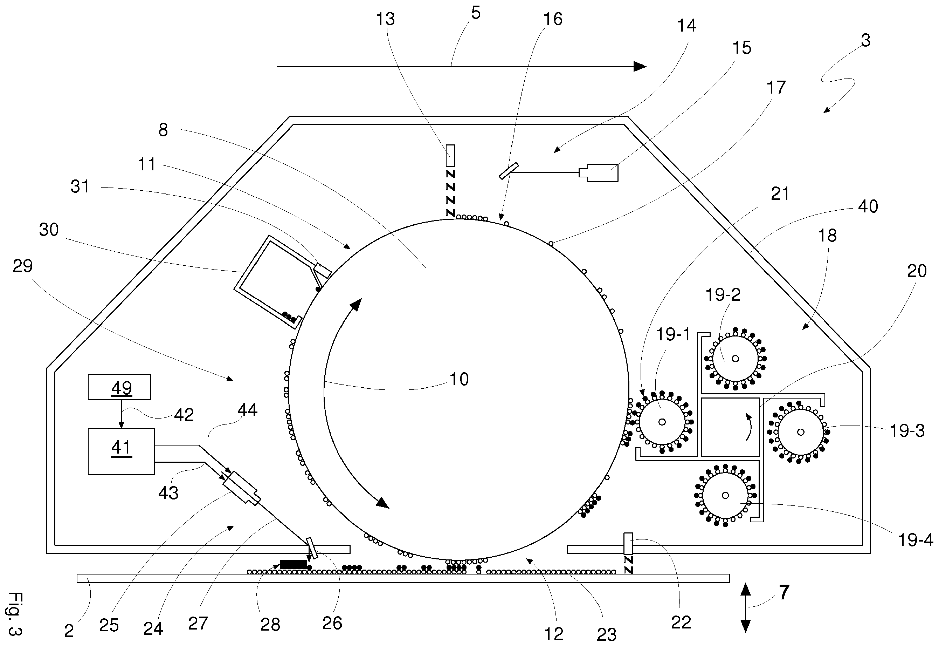

Fig. 3 zeigt einen Querschnitt eines Hauptfertigungskopfs 3, welcher in einer Arbeitsrichtung 5 arbeitet. Der Hauptfertigungskopf 3 wird dabei in Arbeitsrichtung 5 relativ zur Fertigungsunterlage 2 bewegt. Die Bildtrommel 8 ist in einer Arbeitsdrehrichtung 10 bewegbar, wobei die Drehgeschwindigkeit der Bildtrommel 8 mit der Arbeitsbewegung in Arbeitsrichtung 5 derart synchronisiert ist, dass die Bildtrommel 8 über der Fertigungsunterlage 2 abgewälzt ist.

Der Hauptfertigungskopf 3 ist derart ausgebildet, dass das Fertigungsmaterial über einen nach den vorgegebenen Fertigungsrastern für die jeweilige Schicht ortselektiv belichteten Fotoleiter 11 aufnehmbar und zum Fertigungsort, das heißt zur Fertigungsunterlage transportierbar ist. Die ortselektive Auftragung von Fertigungsmaterial auf der Fertigungsunterlage 2 beziehungsweise den darauf bereits abgelegten Materialschichten 12 erfolgt nach dem Prinzip der Elektrofotografie. Im gezeigten Ausführungsbeispiel ist die Bildtrommel 8 mit einem Fotoleiter 11, das heißt einem fotoelektrisch wirksamen Material, beschichtet. Die Bildtrommel 8 ist in einem Gehäuse 40 des Fertigungskopfs 3 in Arbeitsdrehrichtung 10 drehbar angeordnet und liegt im Bereich einer Materialübergabe 12 gegenüber der Fertigungsunterlage 2 frei. Die Materialübergabe 12 ist ein freier Durchgang im Gehäuse 40. Der Hauptfertigungskopf 3 ist mit seinem Gehäuse 40 und damit der Bildtrommel 8 sowie alle anderen Einrichtungen des Fertigungskopfs 3 nach Art eines Schlittens relativ zur Fertigungsunterlage 2 (Fig. 1) translatorisch bewegbar.

Der Hauptfertigungskopf 3 weist außerdem eine elektrische Konditioniereinheit 13 zur elektrostatischen Aufladung des Fotoleiters 11 der Bildtrommel 8 und eine Belichtungseinheit 14 auf. Die Belichtungseinheit 14 umfasst dabei Mittel zur ortselektiven Belichtung des Fotoleiters 11 der Bildtrommel 8. Die Konditioniereinheit 13, die auch als Korotron bezeichnet werden kann, erzeugt an dem Fotoleiter 11 eine elektrostatische Ladung in Richtung der Mantellinie, das heißt dem parallel zur Drehachse der Bildtrommel 8 und in Opposition zur Konditioniereinheit 13 liegenden Abschnitt der Bildtrommel 8. Die Konditioniereinheit 13 kann dabei als Korotron mit so genannten Koronadrähten ausgeführt sein. In weiteren Ausführungsbeispielen ist eine in Achsrichtung der Bildtrommel 8 angeordnete Zeile von Punktladedioden vorgesehen.

Die Belichtungseinheit 14 ist Arbeitsdrehrichtung 10 der Konditioniereinheit 13 nachgeordnet und weist Mittel zur ortselektiven Belichtung des Fotoleiters 11 der Bildtrommel 8 auf. Darunter ist zu verstehen, dass die Belichtungseinheit nach den vorgegebenen Fertigungsrastern durch optische Einwirkung einzelne Stellen, das heißt ortselektiv, der zugewandt liegenden Mantellinie des Fotoleiters 11 belichtet und dadurch die elektrische Ladung neutralisiert. Im gezeigten Ausführungsbeispiel umfasst die Belichtungseinheit 14 als Mittel zur ortselektiven Belichtung des Fotoleiters 11 der Bildtrommel einen Laser 15 und eine dem Laser 15 zugeordnete optische Umlenkeinrichtung. Die Umlenkeinrichtung ist als drehbarer Umlenkspiegel 15 ausgeführt. Der Umlenkspiegel 15 wird von einer nicht dargestellten Antriebseinheit ständig in Umlauf gehalten, wodurch der Laserstrahl 17 des Lasers 15 nach Art eines Laserscanners auf dem Fotoleiter 11 hin und her bewegt wird. Dabei wird der Laser 15 entsprechend den vorgegebenen Fertigungsrastern von der nicht dargestellten Steuereinheit an und aus geschaltet, so dass auf dem Fotoleiter 11 ein Druckbild mit neutralen Stellen und geladenen Stellen erzeugt wird. Die Stellen, welche elektrisch geladen sind, sind in der Darstellung durch einen nicht ausgefüllten Kreis 17 repräsentiert. Der Laser 15 ist vorzugsweise ein Faserlaser, welcher mit hoher Strahlqualität und einem guten elektrisch/optischen Wirkungsgrad optimale Ergebnisse bei der ortselektiven Fixierung von Fertigungsmaterial gewährleistet. In weiteren Ausführungsformen dienen gepulste Laser, beispielsweise ein CO2-Laser, oder ein Nd:YAG-Laser der Fixiereinheit als Aktor.

Die als Laserscanner ausgeführte Belichtungseinheit 14 ist in der Lage, sehr schnell Druckbilder zeilenweise auf dem Fotoleiter 11 zu erzeugen, wodurch hohe Fertigungsgeschwindigkeiten erreichbar sind.

In einem nicht dargestellten Ausführungsbeispiel, das nicht zu der Erfindung gehört, ist anstelle der als Laserscanner ausgeführten Belichtungseinheit 14 eine Belichtungseinheit mit selektiv ansteuerbaren Lichtquellen, insbesondere Laserdioden (LED), als Belichtungseinheit vorgesehen. Die Leuchtdioden sind dabei in Achsrichtung der Bildtrommel 8 aneinandergereiht, wodurch entsprechend der Ansteuerung und Aktivierung der jeweiligen Leuchtdioden einzelne Stellen des Fotoleiters 11 neutralisierbar sind.

Zur Bestückung der Bildtrommel 8 mit Fertigungsmaterial umfasst der Fertigungskopf eine der Belichtungseinheit 14 in Arbeitsdrehrichtung 10 der Bildtrommel 8 nachfolgend angeordnete Entwicklereinheit 18. Die Entwicklereinheit 18 umfasst wenigstens eine elektrostatisch aufladbare Transferwalze, im vorliegenden Ausführungsbeispiel vier Transferwalzen 19-1, 19-2, 19-3, 19-4, zur Aufnahme und Bereitstellung von Fertigungsmaterial. Die Transferwalzen 19-1, 19-2, 19-3, 19-4, sind parallel zur Bildtrommel 8 angeordnet und stellen unterschiedliche Fertigungsmaterialien bereit. Die Transferwalzen 19-1, 19-2, 19-3, 19-4 sind an einem drehbar angeordneten Transferkarussell 20 derart gehalten, dass jeweils eine Transferwalze 19-1 in eine aktive Stellung benachbart der Bildtrommel 8 bewegbar ist.

Die Transferwalzen 19-1, 19-2, 19-3, 19-4 sind drehbar angeordnet und nehmen aus einen ihnen jeweils zugeordneten Materialbehälter an ihrem Umfang Fertigungsmaterial auf, welches mit der Drehung der Transferwalze in Opposition zu der Bildtrommel 8 gebracht wird.

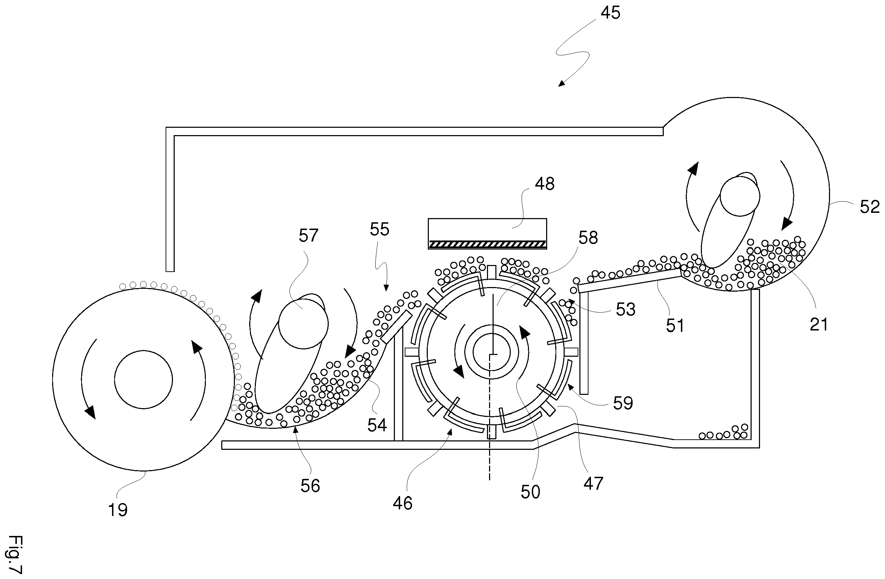

Das Fertigungsmaterial wird an der jeweiligen Transferwalze über elektrostatische Ladungen gehalten. Hierzu ist der Transferwalze 19-1, 19-2, 19-3, 19-4 eine entsprechende Ladeeinheit zugeordnet. Die Ladung des Fertigungsmaterials an den Fertigungswalzen ist dabei elektrisch entgegen der Ladung des Fotoleiters 11 gesetzt. An den durch die Kreise 17 entsprechend dem belichteten Druckbild geladenen Stellen wird ortselektiv Fertigungsmaterial von der aktiven Transferwalze 19-1 an die Bildtrommel 8 übergeben. Im Fall von metallischen Fertigungsmaterialien ist der jeweiligen Transferwalze eine Influenzeinrichtung vorgeschaltet, welche mittels eines elektrisches Feldes auf die Partikel des Fertigungsmaterials einwirkt und die spätere Aufnahme der Partikel durch die Transferwalze 19-1 fördert. Eine Influenzeinrichtung ist unten anhand von Fig. 7 beschrieben.

Mit der weiteren Bewegung der Bildtrommel 8 in Arbeitsdrehrichtung 10 wird das Fertigungsmaterial 21entsprechend den ausgefüllten Kreisen in Richtung der Materialübergabe 12 weiterbewegt. Das Fertigungsmaterial 21 wird vorteilhaft granuliert oder pulverförmig bereitgestellt. Insbesondere für die Anordnung von Stützmaterial in der jeweils zu fertigenden Schicht sind auch flüssige Fertigungsmaterialien vorteilhaft. Hierzu werden entsprechende Stützfertigungsmaterialien eingesetzt, welche gemäß dem Prinzip der Elektrofotografie über die elektrostatische Ladung des Fotoleiters 11 ortselektiv übergeben werden können.

Schließlich umfasst der Fertigungskopf eine in Arbeitsdrehrichtung 10 der Bildtrommel 8 vor der Materialübergabe 12 angeordnete und in Richtung der Fertigungsunterlage 2 wirkende elektrische Unterlagenkonditionierung 22. Die Unterlagenkonditionierung 22 ist dabei an dem Gehäuse des Fertigungskopfs 3 gehalten. Die Unterlagenkonditionierung 22 kann dabei nach Art eines Korotrons mit Koronadrähten ausgestattet sein, welche die Fertigungsunterlage 2 beziehungsweise die darauf bereits abgelegten Materialschichten ionisieren. In einem weiteren Ausführungsbeispiel umfasst die Unterlagenkonditionierung 22 eine in Achsrichtung der Bildtrommel 8, das heißt in Querrichtung der Fertigungsunterlage 2, angeordnete Reihe von Punktladedioden. Die Unterlagenkonditionierung ist derartig dimensioniert, dass die von der Unterlagenkonditionierung erzeugten Ladungen (Kreise 23) größer sind als die von der Konditioniereinheit 13 erzeugten Ladungen (Kreise 17). Auf diese Weise ist sichergestellt, dass das Fertigungsmaterial 21 am Umfang der Bildtrommel 8 in der Oppositionslage, das heißt im dichtesten Abstand gegenüber der Fertigungsunterlage 2, auf die Fertigungsunterlage 2 beziehungsweise die darauf bereits angeordneten Materialschichten abgelegt wird beziehungsweise aufgrund der elektrischen Ladung selbsttätig überspringt.

Der Fertigungskopf 3 umfasst insbesondere eine Fixiereinheit 24 zum Aufschmelzen von Fertigungsmaterial 21, der dazu ausgebildet ist, an den jeweiligen Rasterpositionen 44 das dort befindliche Fertigungsmaterial 21 zu erwärmen und zu schmelzen. Die Fixiereinheit 24 ist dabei derart ausgebildet und angeordnet, dass das von der Bildtrommel 8 auf der Fertigungsunterlage beziehungsweise den auf der Fertigungsunterlage zuvor gefertigten Materialschichten abgelegte Fertigungsmaterial 21 aufschmelzbar ist. Die Fixiereinheit 24 ist daher in Arbeitsdrehrichtung 10 der Bildtrommel nachgeordnet und im Bereich eines Bodens des Gehäuses 40 des Fertigungskopfs 3 angeordnet. Die Fixiereinheit 24 ist daher von dem Fertigungskopf 3 nach Art eines Schlittens über das ortselektiv abgelegte Material fahrbar.

Die Fixiereinheit 24 des Hauptfertigungskopf 3 umfasst einen Laser 25, nämlich im gezeigten Ausführungsbeispiel einen gepulsten CO2-Laser, und eine dem Laser 25 zugeordnete optische Umlenkeinrichtung. Die Umlenkeinrichtung ist im gezeigten Ausführungsbeispiel ein drehbar angeordneter Spiegel, welcher den Laserstrahl 27 des Lasers 25 in Richtung der Fertigungsunterlage 2 umlenkt. Der Spiegel 26 ist vorzugsweise ein Hexagonalspiegel. Der Spiegel 26 wird laufend in einer kontinuierlichen Drehbewegung gehalten und bildet mit dem Laser 25 einen Laserscanner, wobei der Laserstrahl 27, beziehungsweise dessen Laserpulse, in quer zur Arbeitsrichtung 5 liegenden Zeilen umlenkbar ist. Durch entsprechende Ansteuerung, das heißt Ein- und Ausschaltung des Lasers 25, wird der Laser bei Erreichen solcher Stellen eingeschaltet, wo das zuvor von der Bildtrommel 8 ortselektiv abgelegte Fertigungsmaterial 21 zu schmelzen ist. Nach der Verflüssigung durch die Einwirkung der Fixiereinheit 24 erstarrt das Fertigungsmaterial 21. Der erstarrte Bereich des Fertigungsmaterials wird in der Darstellung durch das gefüllte Rechteck 28 repräsentiert.

Die Fixiereinheit 24 ist mittels einer Steuereinheit 41 nach den Fertigungsrastern 49 für die jeweilige Schicht steuerbar. Die Fertigungsraster 49 für einzelne Schichten des zu fertigen Werkstücks werden von einer Fertigungssoftware vorgegeben. Die Steuereinheit 41 ist dazu ausgebildet, entsprechend dem vorgegebenen Fertigungsraster 49 Rasterpositionen 44 und/oder eine mit der Rasterposition 44 verknüpfte Energieanforderung 43 für die Fixiereinheit 24 zu ermitteln. Unter einer Rasterposition 44 ist dabei die kleinste Zelle des Fertigungsrasters 49 zu verstehen, welche ortselektiv ansteuerbar ist. Dieses Verständnis betrifft sowohl die ortselektive Ablage von Fertigungsmaterial 21 als auch die ortselektive Fixierung mittels der Fixiereinheit 24. Die Energieanforderung 43 enthält eine Information zur gewünschten Leistung des Lasers 25 und/oder zur zeitlichen Dauer der Einwirkung des Laserstrahls auf das Fertigungsmaterial 21. Die Rasterpositionen 44, an denen der Laser 25 aktiviert werden soll, sowie die mit der jeweiligen Rasterposition 44 verknüpfte Energieanforderung 43 sind gemeinsam in einer ortselektiven Information 42 abgespeichert für das aktuelle Fertigungsraster 49.

Jeder Umfangsabschnitt der Bildtrommel 8, das heißt die parallel zur Drehachse der Bildtrommel 8 liegenden Mantelabschnitte, erreichen nach dem Passieren der Materialübergabe 12 und Durchlaufen eines Rücklaufabschnitts 29 der Bildtrommel 8 wieder die Konditioniereinheit 13, wo ein neuer Arbeitszyklus des Fertigungskopfs 3 beginnt. Im Bereich des Rücklaufabschnitts 29, welcher zwischen der Materialübergabe 12 und der Konditioniereinheit 13 liegt, ist ein Materialabstreifer 30 angeordnet. Der Materialabstreifer 30 begrenzt zur Oberfläche der Bildtrommel 8 einen schmalen Spalt und hindert gegebenenfalls an der Oberfläche der Bildtrommel 8 verbleibende Materialreste am weiteren Transport. Die Materialreste werden vielmehr von der Oberfläche mechanisch getrennt und im Materialabstreifer 30 gesammelt. In weiteren Ausführungsbeispielen können andere Reinigungseinheiten vorgesehen sein, wie beispielsweise Bürsten oder dergleichen. Im Rücklaufabschnitt 29 ist schließlich eine Entladeeinheit 31 angeordnet, welche gegebenenfalls an dem Fotoleiter 11 verbleibende Ladungen (Kreise 17) neutralisiert. Im gezeigten Ausführungsbeispiel ist die Entladeeinheit 31 baulich mit dem Materialabstreifer 30 beziehungsweise der Reinigungseinheiten verbunden.

In Fig. 4 ist ein schematischer Querschnitt eines Stützfertigungskopfs 4 dargestellt, welcher bezüglich der Anordnung von Bildtrommel 8, Konditioniereinheit 13, Belichtungseinheit 14, Entwicklereinheit 18 und Unterlagenkonditionierung 22 dem Hauptfertigungskopf 3 gemäß Fig. 3 entspricht. Auch ein Materialabstreifer 30 sowie eine Entladeeinheit 31 sind entsprechend dem Materialabstreifer des Hauptfertigungskopfs 3 (Fig. 3) angeordnet. Anstelle eines revolverartig arbeitenden Transferkarussells 20 mit vier Transferwalzen 19-1, 19-2, 19-3, 19-4, können auch andere Anzahlen von Transferwalzen insbesondere an deren Stützfertigungskopf 4 vorgesehen sein. Insbesondere für Serien- oder Massenfertigung ("Rapid- Manufacturing") ist oft ein einziges Stützmaterial, beispielsweise ein wasserlöslicher Kleber oder ähnliches Bindematerial, ausreichend. In solchen Ausführungsbeispielen des erfindungsgemäßen Stützfertigungskopfs 4 ist anstelle des Transferkarussells 20 eine einzelne Transferwalze vorgesehen. Die Transferwalze wird wie bereits zu Fig. 3 beschrieben mit Stützmaterial bestückt. Das Stützmaterial kann dabei pulverförmig, granulatförmig oder flüssig sein.

Im Unterschied zum Hauptfertigungskopf 3 umfasst der Stützfertigungskopf 4 eine Fixiereinheit 32, welche eine Wärmequelle umfasst. Die Wärmequelle ist dabei auf das vorgesehene Stützmaterial abgestimmt, um das von der Bildtrommel 8 aufgetragene Stützmaterial zu verfestigen. Die Wärmequelle umfasst dabei vorzugsweise eine oder mehrere Ultraviolettleuchten, welche in einem quer zur Arbeitsrichtung 5 des Stützfertigungskopfs 4 liegenden Arbeitsbereich auf die abgelegte Materialschicht einwirken.

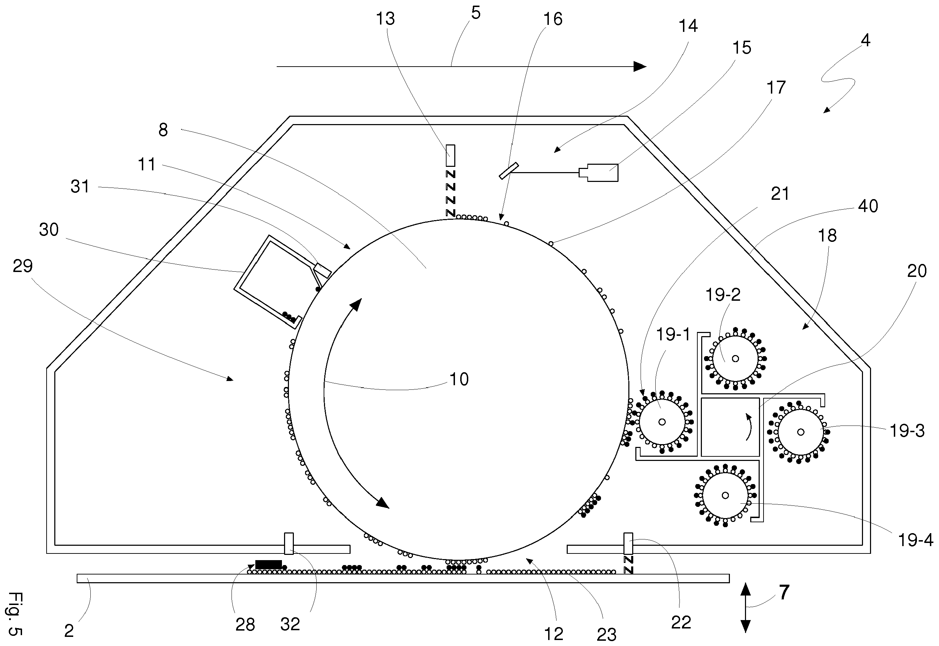

Fig. 5 zeigt ein besonders vorteilhaftes Ausführungsbeispiel eines Hauptfertigungskopfs 4, welcher für zwei entgegengesetzte Arbeitsrichtungen 5 ausgebildet ist. Die Fertigungseinrichtung arbeitet durch einen Hauptfertigungskopf gemäß Fig. 5 mit einer doppelten Fertigungsgeschwindigkeit gegenüber einer Ausführung mit dem Fertigungskopf gemäß Fig. 3. Der Fertigungskopf 4 umfasst im Ausführungsbeispiel gemäß Fig. 5 für eine erste Arbeitsrichtung eine erste Ausstattung mit Konditioniereinheit 13, Belichtungseinheit 14-1, Entwicklereinheit 18-1, Unterlagenkonditionierung 22-1 und Fixiereinheit 24-1 und eine zweite Ausstattung für eine der ersten Arbeitsrichtung entgegengesetzte zweite Arbeitsrichtung auf. Die zweite Ausstattung umfasst ebenfalls die Konditioniereinheit 13, eine Belichtungseinheit 14-2, eine Entwicklereinheit 18-2, eine Unterlagenkonditionierung 22-2 und eine Fixiereinheit 24-2. Die zweite Ausstattung ist im Wesentlichen symmetrisch zur ersten Ausstattung angeordnet und die jeweiligen Einheiten um die Bildtrommel 8 gruppiert. Im gezeigten Aufführungsbeispiel ist eine gemeinsame Konditioniereinheit 13 vorgesehen, welche zentral angeordnet ist und ständig in Betrieb ist und den Fotoleiter 11 der Bildtrommel 8 konditioniert. Die Konditioniereinheit 13, die Belichtungseinheiten 14-1, 14-2, die Entwicklereinheiten 18-1, 18-2, die Unterlagenkonditionierungen 22-1, 22-2 und die Fixiereinheiten 24-1, 24-2 beider Ausstattungen für die jeweiligen Arbeitsrichtungen 5 sind jeweils baugleich und entsprechend der Beschreibung zu Fig. 3 angeordnet und ausgebildet.

Der Hauptfertigungskopf 3 umfasst außerdem für jede Ausstattung eine Reinigungseinheit, nämlich im gezeigten Ausführungsbeispiel einen Materialabstreifer 30-1, 30-2. Außerdem umfasst der Hauptfertigungskopf 3 zwei Endladeeinheiten 31-1, 31-2, welche analog zu dem Aufbau gemäß Fig. 3 im Bereich der Materialabstreifer 30-1, 30-2 angeordnet sind.

Die Bildtrommel 8 des Hauptfertigungskopfs 3 gemäß Fig. 5 ist in entgegengesetzten Arbeitsdrehrichtungen 10 betreibbar. Nachdem der Hauptfertigungskopf in einer Arbeitsrichtung 5 das Ende des Arbeitsbereichs 6 (Fig. 1, 2) erreicht hat, wird der Hauptfertigungskopf 3 in die entgegengesetzte Arbeitsdrehrichtung gefahren und gleichzeitig die Arbeitsdrehrichtung 10 der Bildtrommel umgekehrt. Die beiden Ausstattungen mit Konditioniereinheiten, Belichtungseinheiten, Entwicklereinheiten, Unterlagenkonditionierungen und Fixiereinheiten sind alternativ aktivierbar. Mit der Umschaltung der Arbeitsrichtung 5 des Fertigungskopfs und der damit einhergehenden Umkehrung der Arbeitsdrehrichtung 10 der Bildtrommel 8 wird die bis dahin aktive Ausstattung ausgeschaltet und die jeweils andere Ausstattung aktiviert.

Fig. 6 zeigt einen Stützfertigungskopf 4 welcher ähnlich dem Hauptfertigungskopf 3 gemäß Fig. 5 für entgegengesetzte Arbeitsrichtungen 5 ausgebildet ist. Der Stützfertigungskopf 4 gemäß Fig. 6 weist eine erste Ausstattung mit Konditioniereinheit 13, Belichtungseinheit 14-1, Entwicklereinheit 18-1, Unterlagenkonditionierung 22-1 und Fixiereinheit 24-1 auf. Diese erste Ausstattung ist in einer Arbeitsdrehrichtung 10 entsprechend der Beschreibung des Stützfertigungskopfs gemäß Fig. 4 aktiviert. Der Stützfertigungskopf 4 gemäß Fig. 6 umfasst eine zweite Ausstattung mit einer Belichtungseinheit 14-2, Entwicklereinheit 18-2, Unterlagenkonditionierung 22-2 und einer Fixiereinheit 24-2, welche alternativ zur ersten Ausstattung aktivierbar ist. Sie wird nach einer Umschaltung der Arbeitsdrehrichtung 10 der Bildtrommel 8 aktiviert. Die nicht dargestellte Steuereinheit der Fertigungseinrichtung steuert entsprechend nach erreichen eines Endes des Arbeitsbereichs 6 (Fig. 1, Fig. 2) und einer Umschaltung der Arbeitsrichtung der Fertigungsköpfe die Arbeitsdrehrichtung 10 der Bildtrommel 8 um und aktiviert die jeweils andere Ausstattung.

Mit der erfindungsgemäßen Fertigungseinrichtung können bei rascher und genauer Fertigung verschiedene Fertigungswerkstoffe kombiniert werden. Darüber hinaus ist eine Einfärbung einzelner Fertigungsmaterialien durch Farbpartikel möglich. Gegenüber herkömmlichen generativen Fertigungsverfahren ist mit der erfindungsgemäßen Fertigungseinrichtung eine vergrößerte Baufläche gegeben. Insbesondere werden hohe Fertigungsgeschwindigkeiten erreicht, da der Fertigungswerkstoff nicht schichtweise erwärmt wird und - wie beispielsweise beim selektiven Lasersintern oder Laserschmelzen eine Abkühlung der soeben bearbeiteten Materialschicht abgewartet werden muss. Weiterer Vorteil der erfindungsgemäßen Fertigungseinrichtung ist die Reduzierung von Materialabfall bei verschiedenen Werkstoffen, da mit der erfindungsgemäßen Fertigungseinrichtung binderfreie Werkstoffe verwendet werden und keine Verunreinigungen entstehen.

Die Fixiereinheit des Hauptfertigungskopfs mit einem Laser erlaubt ein vollständiges Schmelzen der ortselektiv vorgelegten Materialportionen, wodurch auf einfache Weise bei Verwendung mehrerer Fertigungswerkstoffe Legierungen miteinander verbunden werden. Mit entsprechend feinkörnigen oder flüssigen Fertigungsmaterialien können sehr feine Oberflächenstrukturen, gefertigt werden.

Die Ausbildung der Fertigungseinrichtung mit einem oder mehreren Hauptfertigungsköpfen und einem oder mehreren Stützfertigungsköpfen 4, das heißt der Einbringung mehrerer Komponenten erlaubt den Einsatz verschiedener Klebstoffe, um verschiedene Funktionen zum Beispiel an hoch belasteten Bauelementen zu realisieren.

Jeder Transferwalze 19-1, 19-2, 19-3, 19-4 ist Fertigungsmaterial über eine Influenzeinrichtung 45 zuführbar ist, welche zur Erzeugung eines elektrischen Feldes im Förderweg des Fertigungsmaterials 21 ausgebildet ist. Fig. 7 zeigt ein Ausführungsbeispiel einer Influenzeinrichtung 45 zur elektrostatischen Induktion des zur Transferwalze 19 zu fördernden Fertigungsmaterials 21. Die Influenzeinrichtung 45 umfasst ein beschaufeltes Förderrad 46, welches in Drehrichtung 50 antreibbar ist und an seinem Umfang Schaufeln 47 zum Transport von Fertigungsmaterial 21 trägt. Im oberen Sektor des Förderrads 46, das heißt über der Drehachse liegend, ist in Drehrichtung 50 hinten liegend eine Zuführrutsche 51 angeordnet. Die Zuführrutsche 51 führt aus einem Vorratsbehälter 52 vorgelegtes Fertigungsmaterial 21 an das Förderrad 46 heran, so dass kontinuierlich Fertigungsmaterial 21 in die Schaufeln 47 fällt, wenn sich die jeweilige Schaufel in einer Beschickungsstellung 53 neben der Zuführrutsche 51 befindet. Auf der gegenüberliegenden Seite des Förderrads 46 ist eine elektrisch isolierte Rutsche 54 ebenfalls im oberen Sektor des Förderrads 46 angeordnet, wobei in einer Abgabestellung 55 der Schaufeln 46, in denen die jeweilige Schaufel 46 der Rutsche 54 gegenüberliegend, die Materialfracht der Schaufel 46 in die Rutsche 54 fällt und letztlich zur Transferwalze 19 gefördert wird.

Die Influenzeinrichtung 45 umfasst eine elektrische Spannungsquelle 48, welche über dem Förderrad 46 angeordnet ist und im vorliegenden Ausführungsbeispiel zentral liegt. Die Spannungsquelle 48 ist dabei derart nah an dem Förderrad 46 angeordnet, dass ihr elektrisches Feld den Bereich der Schaufeln 47 erfasst.

Die elektrisch isolierten Schaufeln 47 passieren daher das elektrische Feld der Spannungsquelle 48 zwischen der Beschickungsstellung 53 und der Abgabestellung 55, wobei das elektrische Feld auf das passierende Fertigungsmaterial 21 wirkt und elektrostatisch induziert, so genannte Influenz.

Im gezeigten Ausführungsbeispiel gleitet das elektrostatisch geladene Fertigungsmaterial 21 über die elektrisch isolierte Rutsche 54 in einen ebenfalls elektrisch isolierten Vorschubtank 56. In dem Vorschubtank 56 ist eine Fördereinrichtung 57 angeordnet, welche das Fertigungsmaterial 21 mit kreiselndem Vorschub zur Transferwalze 19 fördert.

Das Förderrad 46 bzw. die Schaufeln 47 sind elektrisch isoliert. Die Schaufeln 47 können dabei Ausnehmungen im Mantel einer Walze sein. Die Schaufeln 47 bzw. Aussparungen verfügen in einem Ausführungsbeispiel über eine leitende Bodenplatte 59, welche auf einer Isolierten Schicht liegt. Die Bodenplatte kommt während der umlaufenden Bewegung des Förderrads 46 mit einem Erdungsfühler 58 in Kontakt, so dass nicht erwünschte Ladungsverteilungen abgeleitet sind.

## Patentansprüche

1. Generative Fertigungseinrichtung zur schichtweisen additiven Fertigung von dreidimensionalen Objekten, mit mindestens einer Fertigungsunterlage (2) und mindestens einem Fertigungskopf (3, 4, 4') zur Anordnung von granuliertem, pulverförmigem oder flüssigem Fertigungsmaterial (21) auf der Fertigungsunterlage (2) beziehungsweise dem auf der Fertigungsunterlage (2) liegenden Material, welcher dazu ausgebildet ist, Fertigungsmaterial (21) ortselektiv am Fertigungsort in Rasterpositionen (44) nach vorgegebenen Fertigungsrastern (49) für die jeweilige Schicht abzugeben, wobei der Fertigungskopf (3, 4, 4.) mindestens eine Fixiereinheit (24, 24-1, 24-2) zum Fixieren von Fertigungsmaterial (21) umfasst, wobei die Fertigungsunterlage (2) und der Fertigungskopf (3, 4, 4') sowohl entsprechend einer Arbeitsrichtung (5) in der Ebene einer Schicht, als auch in einer Vorschubrichtung (7) bezogen auf die Dicke der Schichten gegeneinander verschieblich angeordnet sind, **dadurch gekennzeichnet, dass** die Fixiereinheit (24, 24-1, 24-2) dazu ausgebildet ist, an den jeweiligen Rasterpositionen (44) das dort befindliche Fertigungsmaterial (21) ortselektiv zu fixieren und dabei dem Fertigungsmaterial (21) ortselektiv, nämlich an der konkreten Arbeitsposition entsprechend der Rasterposition (44) im Fertigungsraster (49), Energie zu vermitteln, um das Fertigungsmaterial (21) zu erwärmen und zu schmelzen, wobei die Fixiereinheit (24, 24-1, 24-2) einen Laser (25), und eine dem Laser (25) zugeordnete, optische Umlenkeinrichtung, insbesondere einen drehbar angeordneten Umlenkspiegel (26), umfasst, wobei der Laser (25) von einer Steuereinheit (41) nach dem jeweiligen Fertigungsraster (49) steuerbar und aktivierbar ist.

2. Fertigungseinrichtung nach Anspruch 1,
**dadurch gekennzeichnet,**
**dass** der Fixiereinheit (24, 24-1, 24-2) mittels der Steuereinheit (41) nach den Fertigungsrastern (49) für die jeweilige Schicht steuerbar ist, welche dazu ausgebildet ist, entsprechend dem vorgegebenen Fertigungsraster (49) Rasterpositionen (45) und/oder eine mit der Rasterposition (45) verknüpfte Energieanforderung (43) für die Fixiereinheit (24, 24-1, 24-2) zu ermitteln.

3. Fertigungseinrichtung nach einem der vorhergehenden Ansprüche, **dadurch gekennzeichnet,**
**dass** der Fertigungskopf (3, 4, 4') derart ausgebildet ist, dass das Fertigungsmaterial (21) über einen nach den vorgegebenen Fertigungsrastern (49) für die jeweilige Schicht ortselektiv belichteten Fotoleiter (11) aufnehmbar und zum Fertigungsort transportierbar ist, wobei der Fertigungskopf (3, 4, 4') hierfür die folgenden Merkmale aufweist: eine elektrofotographische Bildtrommel (8), welche an ihrem Mantel eine Fotoleiter (11) trägt und im Bereich einer Materialübergabe (12) des Fertigungskopfs (3) gegenüber der Fertigungsunterlage (2) frei liegt, mindestens eine elektrische Konditioniereinheit (13) zur elektrostatischen Aufladung des Fotoleiters (11) der Bildtrommel (8), mindestens eine der Konditioniereinheit (13) in Arbeitsdrehrichtung (10) der Bildtrommel (8) nachfolgend angeordnete Belichtungseinheit (14, 14-1, 14-2), welche Mittel zur ortseffektiven Belichtung des Fotoleiters (11) der Bildtrommel (8) umfasst, mindestens eine der Belichtungseinheit (14, 14-1, 14-2) in Arbeitsdrehrichtung (10) der Bildtrommel (8) nachfolgend angeordnete Entwicklereinheit (18, 18-1, 18-2) mit einer elektrostatisch aufladbaren Transferwalze (19-1, 19-2, 19-3, 19-4) zur Bereitstellung von elektrostatisch aufgeladenem Fertigungsmaterial (21), welche parallel zur Bildtrommel (8) angeordnet ist, mindestens eine in Arbeitsdrehrichtung (10) der Bildtrommel (8) vor der Materialübergabe (12) angeordnete und in Richtung der Fertigungsunterlage (2) wirkende elektrische Unterlagenkonditionierung (22, 22-1, 22-2).

4. Fertigungseinrichtung nach Anspruch 3,
**dadurch gekennzeichnet,**
**dass** der Transferwalze (19-1, 19-2, 19-3, 19-4) eine Ladeeinheit (45) zugeordnet ist.

5. Fertigungseinrichtung nach Anspruch 3 oder 4,
**dadurch gekennzeichnet,**
**dass** der Transferwalze (19-1, 19-2, 19-3, 19-4) Fertigungsmaterial über eine elektrische Influenzeinrichtung (45) zuführbar ist, welche zur Erzeugung eines elektrischen Feldes im Förderweg des Fertigungsmaterials (21) ausgebildet ist.

6. Fertigungseinrichtung nach Anspruch 5,
**dadurch gekennzeichnet,**
**dass** die Influenzeinrichtung (45) ein beschaufeltes Förderrad (46) umfasst, dessen Schaufeln (47) elektrisch isoliert sind und zwischen einer Beschickungsstellung und einer Abgabestellung das elektrische Feld einer elektrischen Spannungsquelle (48) passieren.

7. Fertigungseinrichtung nach einem der Ansprüche 3 bis 6,
**dadurch gekennzeichnet,**
**dass** der Fertigungskopf (3) für eine erste Arbeitsrichtung (5) eine erste Ausstattung mit jeweils mindestens einer Konditioniereinheit (13), Belichtungseinheit (14-1), Entwicklereinheit (18-1), Unterlagenkonditionierung (22-1) und Fixiereinheit (24-1) aufweist und für eine der ersten Arbeitsrichtung entgegengesetzte zweite Arbeitseinrichtung eine zweite Ausstattung mit jeweils mindestens einer Konditioniereinheit (13), Belichtungseinheit (14-2), Entwicklereinheit (18-2), Unterlagenkonditionierung (22-2) und Fixiereinheit (24-2) aufweist, welche im Wesentlichen symmetrisch zur ersten Ausstattung angeordnet ist.

8. Fertigungseinrichtung nach einem der vorhergehenden Ansprüche, **gekennzeichnet durch** wenigstens einen Fertigungskopf als Hauptfertigungskopf (3) für Fertigungsmaterial und einen koordiniert mit dem Hauptfertigungskopf (3) ansteuerbaren Fertigungskopf als Stützfertigungskopf (4) für Stützmaterial.

9. Fertigungseinrichtung nach Anspruch 8,
**dadurch gekennzeichnet,**
**dass** der Stützfertigungskopf (4) bezüglich der Anordnung von Bildtrommel (8), Konditioniereinheit (13), Belichtungseinheit (14, 14-1, 14-2), Entwicklereinheit (18, 18-1, 18-2) und Unterlagenkonditionierung (22, 22-1, 22-2) dem Hauptfertigungskopf (3) entspricht.

10. Fertigungseinrichtung nach Anspruch 8 oder 9,
**dadurch gekennzeichnet,**
**dass** die mindestens eine Fixiereinheit (32) des Stützfertigungskopfs (4) eine Wärmequelle umfasst.

11. Fertigungseinrichtung nach einem der Ansprüche 3 bis 10,
**dadurch gekennzeichnet,**
**dass** die Unterlagenkonditionierungen (22, 22-1, 22-2) derart konfiguriert sind, dass ein Betrag der durch die Unterlagenkonditionierung (22, 22-1, 22-2) erzeugbaren elektrischen Ladung größer ist als ein Betrag der von der Konditioniereinheit (13) erzeugbaren Ladung der Bildtrommel (8).

12. Fertigungseinrichtung nach einem der Ansprüche 3 bis 11,
**dadurch gekennzeichnet,**
**dass** die Konditioniereinheit (13) und/oder die Unterlagenkonditionierung (22, 22-1, 22-2) entweder beide zur Erzeugung einer negativen elektrostatischen Aufladung oder zur Erzeugung einer positiven elektrostatischen Aufladung ausgebildet sind oder zwischen einer Einstellung zur Erzeugung einer negativen elektrostatischen Aufladung und einer Einstellung zur Erzeugung einer positiven elektrostatischen Aufladung umschaltbar ausgebildet sind.

13. Verfahren zum Betrieb einer Fertigungseinrichtung nach einem der vorhergehenden Ansprüche,
**dadurch gekennzeichnet,**
**dass** die Steuereinheit (41), welche der Fixiereinheit (24, 24-1, 24-2) zugeordnet ist, der Fixiereinheit (24, 24-1, 24-2) Rasterpositionen (44), an denen die Fixiereinheit (24, 24-1, 242) aktiviert wird, entsprechend dem Fertigungsraster vorgibt.

14. Verfahren nach Anspruch 13,
**dadurch gekennzeichnet,**
**dass** die Steuereinheit (41) der Fixiereinheit (24, 24-1, 24-2) Energieanforderungen (43) für die jeweilige Rasterposition (44) vorgibt.

## Claims

1. Rapid prototyping device for the layered additive manufacturing of three-dimensional objects, with at least one manufacturing base (2) and at least one manufacturing head (3, 4, 4 ') for the arrangement of granular, powder or liquid manufacturing material (21) on the manufacturing base (2) or the material located on the manufacturing base (2), which is developed to dispense manufacturing materials (21) in a location-selective manner at the manufacturing site in grid positions (44) according to predetermined manufacturing grids (49) for each layer, whereby the manufacturing head (3, 4, 4') comprises at least one fuser unit (24, 24-1, 24-2) for the fusing of manufacturing material (21), whereby the manufacturing base (2) and the manufacturing head (3, 4, 4') are located such that they can be slid against each other both in accordance with a direction of travel (5) in the plane of a layer as well as in a feed direction (7) relative to the thickness of the layers, **characterised in that** the fuser unit (24, 24-1, 24-2) is developed to fuse to the respective grid positions (44) and in a location-selective manner the manufacturing materials (21) which is located there, namely to impart energy at the concrete working position corresponding to the grid position (44) in the manufacturing grid (49) in order to heat and melt the manufacturing material (21), whereby the fixing unit (24, 24-1, 24-2) comprises a laser (25) and an optical deflection device assigned to the laser (25), in particular a rotatably mounted deflecting mirror (26), wherein the laser (25) can be controlled and activated by a control unit (41) according to the respective manufacturing grid (49).

2. Prototyping device pursuant to Claim 1, **characterised in that** the fuser unit (24, 24-1, 24-2) is controllable for the respective layer by means of the control unit (41), which is developed so as to determine, according to the predetermined manufacturing grids (49), grid positions (45) and/or an energy requirement (43) connected with the grid position (45) for the fuser unit (24, 24-1, 24-2).

3. Prototyping device according to one of the preceding claims, **characterised in that** the manufacturing head (3, 4, 4') is designed such that the manufacturing material (21) can be received and transported to the place of manufacture over an exposed photoconductor (11) according to the specified manufacturing grids (49) for the respective layer in a location-selective manner, whereby the manufacturing head (3, 4, 4') has the following features for this purpose: an electrophotographic imaging drum (8) having a photoconductor (11) on its shell and being free in the area of a material handing (12) of the manufacturing head (3) with respect to the manufacturing base (2), at least one electrical conditioning unit (13) for the electrostatic charging of the photoconductor (11) of the image drum (8), at least one the exposure unit (14, 14-1, 14-2) located downstream of the conditioning units (13) in the working direction of rotation (10) of the image drum (8), which has means for the location-effective exposure of the photoconductor (11) of the image drum (8), at least one developer unit (18, 18-1, 18-2) located downstream of the exposure units (14, 14-1, 14-2) in the operating direction of rotation (10) of the image drum (8) with an electrostatically chargeable transfer roller (19-1, 19-2, 19-3, 19-4) for providing electrostatically charged manufacturing materials (21) which is located parallel to the image drum (8), at least one electrical base conditioning (22, 22-1, 22-2) arranged in the working direction of rotation (10) of the image drum (8) prior to the material transfer (12) and acting in the direction of the manufacturing base (2).

4. A prototyping device according to Claim 3, **characterised in that** the transfer roller (19-1, 19-2, 19-3, 19-4) is associated with a loading unit (45).

5. A prototyping device according to one of the Claims 3 or 4, **characterised in that** manufacturing material can be supplied to the transfer roller (19-1, 19-2, 19-3, 19-4) via an electrical induction device (45), which is developed for generating an electric field in the conveying path of the manufacturing material (21).

6. A prototyping device according to Claim 5, **characterised in that** the induction device (45) comprises a bladed conveyor wheel (46), the blades (47) of which are electrically insulated and pass through the electric field of an electric voltage source (48) between a loading position and a dispensing position.

7. Prototyping device according to one of Claims 3 to 6, **characterised in that** the manufacturing head (3) has, for a first working direction (5), a first device with at least one conditioning unit (13) exposure unit (14-1), developer unit (18-1), base conditioning (22-1) and fuser unit (24-1) and for a second working direction opposite the first working direction, a second device each with at least one conditioning unit (13), exposure unit (14-2), developer unit (18-2) base conditioning (22-2) and fuser unit (24-2) which is essentially positioned symmetrical to the first device.

8. A prototyping device according to one of the preceding claims, **characterised by** at least one manufacturing head as the main manufacturing head (3) for manufacturing materials and a controllable manufacturing head coordinated with the main manufacturing head (3) as a supporting manufacturing head (4) for supporting material.

9. A prototyping device according to Claim 8, **characterised in that** the supporting manufacturing head (4) corresponds to the main manufacturing head (3) relative to the array of image drum (8), conditioning unit (13), exposure unit (14, 14-1, 14-2), developer unit (18, 18-1, 18-2) and base conditioning (22, 22-1, 22-2).

10. A prototyping device according to Claim 8 or 9, **characterised in that** the at least one fuser unit (32) of the supporting manufacturing head (4) comprises a heat source.

11. A prototyping device according to one of Claims 3 to 10, **characterised in that** the base conditionings (22, 22-1, 22-2) are configured such that an amount of the electric charge which can be produced by the base conditioning (22, 22-1, 22-2) is greater than an amount of the charge of the image drum (8) which can be produced from the conditioning unit (13).

12. A prototyping device according to one of Claims 3 to 11, **characterised in that** the conditioning unit (13) and/or the base conditioning (22, 22-1, 22-2) are both developed either to produce a negative electrostatic charge or to produce a positive electrostatic charging or to be switchable between a setting for generating a negative electrostatic charge and a setting for generating a positive electrostatic charge.

13. A method for operating a prototyping device according to any one of the preceding claims, **characterised in that** the control unit (41) which is allocated to the fuser unit (24, 24-1, 24-2) provides grid positions (44) to the fuser unit (24, 24-1, 24-2) on which the fuser unit (24, 24-1, 24-2) is activated according to the manufacturing grid.

14. A method according to Claim 13, **characterised in that** the control unit (41) of the fuser unit (24, 24-1, 24-2) defines power requirements (43) for the respective grid position (44).

## Revendications

1. Dispositif de production generative pour la production additive par couches d'objets tridimensionnels, avec au moins une base de production (2) et au moins une tête de production (3, 4, 4') pour disposer un matériau de production granulé, en poudre ou liquide (21) sur la base de production (2) ou le matériau reposant sur la base de production (2), qui est conçu pour acheminer le matériau de production (21) localement sur le lieu de production en des positions de trame (44) selon des grilles de production prédéterminées (49) pour la couche respective, dans lequel la tête de production (3, 4, 4') au moins une unité de fixation (24, 24-1, 24-2) pour fixer le matériau de production (21), dans laquelle la base de production (2) et la tête de production (3, 4, 4') sont toutes deux orientées dans le sens de travail (5) dans le plan d'une couche, ainsi que dans une direction d'alimentation (7) par rapport à l'épaisseur des couches, sont disposées de manière à pouvoir se déplacer les unes contre les autres, **caractérisé en ce que** l'unité de fixation (24, 24-1, 24-2) est conçue pour fusionner les positions respectives de la grille (44) et de manière sélective en fonction de l'emplacement des matériaux de production (21) qui y sont situés, à savoir pour transmettre de l'énergie au position de travail en béton correspondant à la position de grille (44) dans la grille de production (49) afin de chauffer et de fondre le matériau de production (21), l'unité de fusion (24, 24-1, 24-2) comprend un laser (25) et un dispositif de déviation optique associé au laser (25), en particulier un miroir de déviation rotatif (26). , dans lequel le laser (25) peut être commandé et activé par un unité de commande (41) en fonction de la grille de production respective (49).

2. Dispositif de prototypage selon la revendication 1, **caractérisé en ce que** l'unité de fusion (24, 24-1, 24-2) peut être commandée pour la couche respective au moyen de l'unité de commande (41), qui est développée pour déterminer, selon les grilles de fabrication (49) prédéterminées, des positions de grille (45) et / ou un besoin en énergie (43) connecté à la position de grille (45) de l'unité de fusion (24, 24-1, 24-2).

3. Dispositif de fabrication selon l'une des revendications précédentes, **caractérisé en ce que** la tête de production (3, 4, 4') est conçue de telle sorte que le matériau de production (21) passe par les grilles de fabrication prédéterminées (49) pour le photoconducteur exposé à la couche respectif (11) pouvant être réceptionné et transporté sur le site de production, la tête de production (3, 4, 4') présentant à cet effet les caractéristiques suivantes: un tambour photographique électrophotographique (8) portant un photoconducteur (11) sur son enveloppe et dans la zone un transfert de matière (12) de la tête de production (3) par rapport à la base de production (2) est exposé, au moins une unité de conditionnement électrique (13) pour la charge électrostatique du photoconducteur (11) du tambour d'imagerie (8), au moins une de l'unité de conditionnement (13) en sens de travail (10) le tambour photoconducteur (8) disposé ultérieurement dans une unité d'exposition (14, 14-1, 14-2), lequel moyen pour l'exposition sélective du photoconducteur sur le site s (1 1) du tambour d'image (8), au moins une des unités d'exposition (14, 14-1, 14-2) dans la direction de travail (10) du tambour d'image (8) disposées successivement dans l'unité de développement (18, 18-1, 18-2) avec un rouleau de transfert pouvant être chargé électrostatiquement (19-1, 19-2, 19-3, 19-4) pour fournir un matériau de production chargé électrostatiquement (21), qui est disposé parallèlement au tambour d'image (8), au moins un dans le sens de travail (10) le tambour d'image (8) placé avant le transfert de matériau (12) et disposé en direction de la base de production (2) agissant comme conditionneur de sous-couche électrique (22, 22-1, 22-2).

4. Dispositif de fabrication selon l'une des revendication 3, **caractérisé en ce que** le rouleau de transfert (19-1, 19-2, 19-3, 19-4) est associé à une unité de chargement (45).

5. Dispositif de fabrication selon l'une des revendications 3 à 4, **caractérisé en ce que** le rouleau de transfert (19-1, 19-2, 19-3, 19-4) peut être alimenté par un moyen d'influence électrique (45) permettant de générer un champ électrique dans Le trajet de livraison du matériau de production (21) est formé.

6. Dispositif de fabrication selon la revendication 5, **caractérisé en ce que** le moyen d'influence (45) comprend une roue de convoyage à lames (46) dont les lames (47) sont isolées électriquement et passent entre une position d'alimentation et une position de distribution, le champ électrique d'une source de tension électrique (48).

7. Dispositif de fabrication selon l'une des revendications 3 à 6, **caractérisé en ce que** la tête de production (3) pour une première direction de travail (5) est un premier équipement avec au moins une unité de conditionnement (13), une unité d'exposition (14-1), une unité de développement (18-1), un conditionnement de tampon (22-1) et une unité de fixation (24-1) et pour un premier sens de travail opposé à un second moyen de travail, un second équipement avec au moins une unité de conditionnement (13), une unité d'exposition (14-2), une unité de développement (18-2), un conditionnement de plaquettes (22-2) et une unité de fixation (24-2), qui est agencée de manière sensiblement symétrique par rapport au premier dispositif.

8. Dispositif de production selon l'une des revendications précédentes. **caractérisé par** au moins une tête de production en tant que tête de production principale (3) pour le matériau de production et une tête de production pouvant être commandée en coordination avec la tête de production principale (3) en tant que tête de production auxiliaire (4).

9. Dispositif de fabrication selon la revendication 8, **caractérisé en ce que** la tête de production de support (4) est adaptée à l'agencement du tambour photoconducteur (8), de l'unité de conditionnement (13), de l'unité d'exposition (14, 14-1, 14-2), de l'unité de développement (18, 18-1, 18-2) et le conditionnement des tampons (22, 22-1, 22-2) correspond à la tête de fabrication principale (3).

10. Dispositif de fabrication selon la revendication 8 ou 9, **caractérisé en ce que** la au moins une unité de fixation (32) de la tête de fabrication de support (4) comprend une source de chaleur.

11. Dispositif de production selon l'une des revendications 3 à 10, **caractérisé en ce que** les conditionnements de sous-couche (22, 22-1, 22-2) sont configurés de telle sorte que la quantité de charge électrique pouvant être générée par le conditionnement de sous-couche (22, 22-1, 22-2) augmente. est une quantité de charge du tambour d'image (8) pouvant être générée par l'unité de conditionnement (13).

12. Dispositif de fabrication selon l'une des revendications précédentes, **caractérisé en ce que** l'unité de conditionnement (13) et / ou le conditionnement de base (22, 22-1, 22-2) sont conçus pour générer une charge électrostatique négative ou pour générer une charge électrostatique positive. formé commutable entre un réglage pour générer une charge électrostatique négative et un réglage pour générer une charge électrostatique positive.

13. Procédé pour faire fonctionner un appareil de production selon l'une des revendications précédentes, **caractérisé en ce que** l'unité de commande (41) associée à l'unité de fixation (24, 24-1, 24-2) de l'unité de fixation (24, 24-1, 24-2)) Positions de trame (44) auxquelles l'unité de fixation (24, 24-1, 24-2) est activée, conformément aux indications de la grille de fabrication.

14. Procédé selon la revendication 13, **caractérisé en ce que** l'unité de commande (41) de l'unité de fixation (24, 24-1, 24-2) spécifie les besoins en énergie (43) pour la position de trame respective (44).
